# EUROPEAN PATENT SPECIFICATION

(11) **EP 1 655 879 B1**
(45) Date of publication and mention of the grant of the patent: **10.12.2008**
(21) Application number: 04026083.8
(22) Date of filing: 03.11.2004
(51) Int. Cl.: H04L 1/18, H04L 1/16

(54) **HARQ protocol optimization for packet data transmission**
HARQ Protokolloptimierung für Paketdatenübertragung
Optimisation de protocole HARQ pour la transmission de données par paquets

(43) Date of publication of application: 10.05.2006
(73) Proprietor: Panasonic Corporation, Kadoma-shi Osaka 571-8501 (JP)
(72) Inventor: Löhr, Joachim, 64287 Darmstadt (DE); Petrovic, Dragan, 64295 Darmstadt (DE); Charpentier, Frederic, 10115 Berlin (DE)
(74) Representative: Grünecker, Kinkeldey, Stockmair & Schwanhäusser Anwaltssozietät

(56) References cited:
- WO-A-03/055122
- US-A1- 2002 053 058
- KALLEL S: "COMPLEMENTARY PUNCTURED CONVOLUTIONAL (CPC) CODES AND THEIR APPLICATIONS" IEEE TRANSACTIONS ON COMMUNICATIONS, IEEE INC. NEW YORK, US, vol. 43, no. 6, 1 June 1995 (1995-06-01), pages 2005-2009, XP000510831 ISSN: 0090-6778

## Description

### FIELD OF THE INVENTION

The invention relates to a HARQ method using incremental redundancy and providing synchronous retransmissions. Further, the invention relates to a receiving entity and a transmitting entity employing the HARQ method and to a mobile communication system, such as UMTS.

### TECHNICAL BACKGROUND

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

A common technique for error detection and correction in packet transmission systems over unreliable channels is called hybrid Automatic Repeat request (HARQ). Hybrid ARQ is a combination of Forward Error Correction (FEC) and ARQ.

If a FEC encoded packet is transmitted and the receiver fails to decode the packet correctly (errors are commonly detected based on a CRC (Cyclic Redundancy Check)), the receiver requests a retransmission of the packet. Commonly the transmission of additional information is called "retransmission (of a packet)", although this retransmission does not necessarily mean a transmission of the same encoded information, but could also mean the transmission of any information belonging to the packet (e.g. additional redundancy information).

Depending on the information (generally code-bits/symbols), of which the transmission is composed of, and depending on how the receiver processes the information, the following hybrid ARQ schemes are defined:

### HARQ Type I

If the receiver fails to decode a packet correctly, the information of the encoded packet is discarded and a retransmission is requested. This implies that all transmissions are decoded separately. Generally, retransmissions contain identical information (code-bits/symbols) to the initial transmission.

### HARQ Type II

If the receiver fails to decode a packet correctly, a retransmission is requested, where the receiver stores the information of the (erroneous received) encoded packet as soft information (soft-bits/symbols). This implies that a soft-buffer is required at the receiver. Retransmissions can be composed out of identical, partly identical or non-identical information (code-bits/symbols) according to the same packet as earlier transmissions.

When receiving a retransmission the receiver combines the stored information from the soft-buffer and the currently received information and tries to decode the packet based on the combined information. The receiver may also try to decode the transmission individually, however generally performance increases when combining transmissions.

The combining of transmissions refers to so-called soft-combining, where multiple received code-bits/symbols are likelihood combined and solely received code-bits/symbols are code combined. Common methods for soft-combining are Maximum Ratio Combining (MRC) of received modulation symbols and log-likelihood-ratio (LLR) combining (LLR combing only works for code-bits).

Type II schemes are more sophisticated than Type I schemes, since the probability for correct reception of a packet increases with receive retransmissions. This increase comes at the cost of a required hybrid ARQ soft-buffer at the receiver. This scheme can be used to perform dynamic link adaptation by controlling the amount of information to be retransmitted.

E.g. if the receiver detects that decoding has been "almost" successful, it can request only a small piece of information for the next retransmission (smaller number of code-bits/symbols than in previous transmission) to be transmitted. In this case it might happen that it is even theoretically not possible to decode the packet correctly by only considering this retransmission by itself (non-self-decodable retransmissions).

### HARQ Type III

This is a subset of Type II with the restriction that each transmission must be self-decodable.

### Packet Scheduling

Packet scheduling may be a radio resource management algorithm used for allocating transmission opportunities and transmission formats to the users admitted to a shared medium. Scheduling may be used in packet based mobile radio networks in combination with adaptive modulation and coding to maximize throughput/capacity by e.g. allocating transmission opportunities to the users in favorable channel conditions. The packet data service in UMTS may be applicable for the interactive and background traffic classes, though it may also be used for streaming services. Traffic belonging to the interactive and background classes is treated as non real time (NRT) traffic and is controlled by the packet scheduler. The packet scheduling methodologies can be characterized by:
- **Scheduling period/frequency:** The period over which users are scheduled ahead in time.
- **Serve order:** The order in which users are served, e.g. random order (round robin) or according to channel quality (C/I or throughput based).
- **Allocation method:** The criterion for allocating resources, e.g. same data amount or same power/code/time resources for all queued users per allocation interval.

The packet scheduler for uplink is distributed between Radio Network Controller (RNC) and user equipment in 3GPP UMTS R99/R4/R5. On the uplink, the air interface resource to be shared by different users is the total received power at a Node B, and consequently the task of the scheduler is to allocate the power among the user equipment(s). In current UMTS R99/R4/R5 specifications the RNC controls the maximum rate/power a user equipment is allowed to transmit during uplink transmission by allocating a set of different transport formats (modulation scheme, code rate, etc.) to each user equipment.

The establishment and reconfiguration of such a TFCS (transport format combination set) may be accomplished using Radio Resource Control (RRC) messaging between RNC and user equipment. The user equipment is allowed to autonomously choose among the allocated transport format combinations based on its own status e.g. available power and buffer status. In current UMTS R99/R4/R5 specifications there is no control on time imposed on the uplink user equipment transmissions. The scheduler may e.g. operate on transmission time interval basis.

### UMTS Architecture

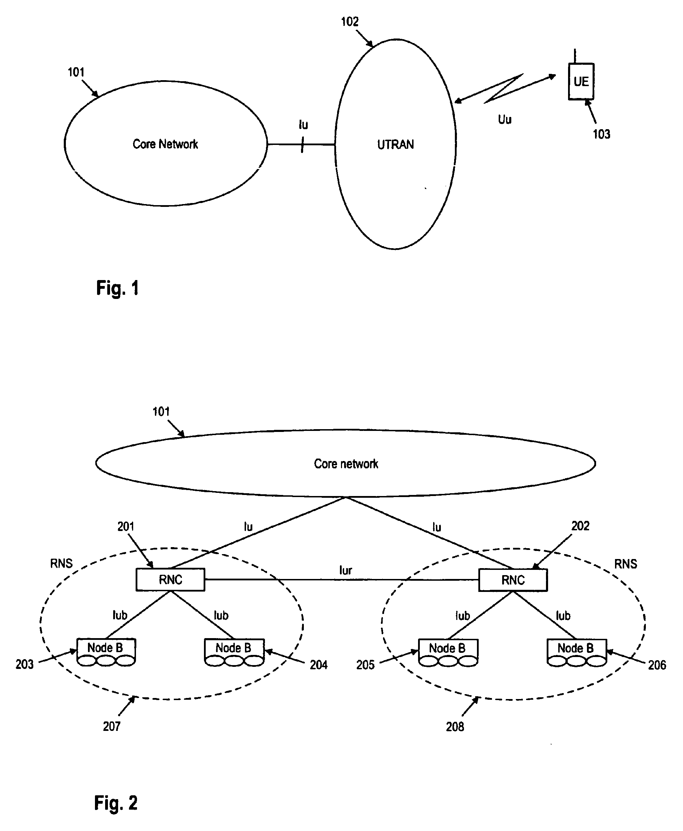

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (lu, Uu). It should be noted that UMTS system is modular and it is therefore possible to have several network elements of the same type.

In the sequel two different architectures will be discussed. They are defined with respect to logical distribution of functions across network elements. In actual network deployment, each architecture may have different physical realizations meaning that two or more network elements may be combined into a single physical node.

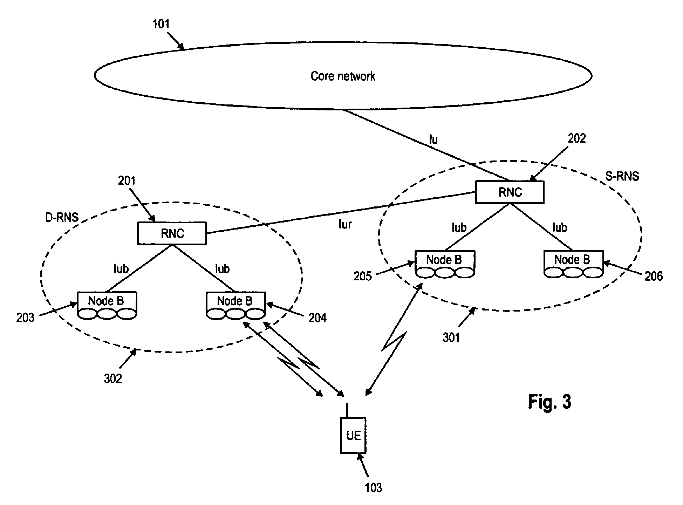

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

### Enhanced Uplink Dedicated Channel (E-DCH)

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org). Since the use of IP-based services become more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B may be reduced and thus the scheduler may be able to respond faster to temporal changes in the uplink load. This may reduce the overall latency in communications of the user equipment with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A transmission time interval length of 2ms is currently investigated for use on the E-DCH, while a transmission time interval of 10ms is commonly used on the other channels. Hybrid ARQ, which was one of the key technologies in HSDPA, is also considered for the enhanced uplink dedicated channel. The Hybrid ARQ protocol between a Node B and a user equipment allows for rapid retransmissions of erroneously received data units, and may thus reduce the number of RLC (Radio Link Control) retransmissions and the associated delays. This may improve the quality of service experienced by the end user.

To support enhancements described above, a new MAC sub-layer is introduced which will be called MAC-e in the following (see 3GPP TSG RAN WG1, meeting #31, Tdoc R01-030284, "Scheduled and Autonomous Mode Operation for the Enhanced Uplink"). The entities of this new sub-layer, which will be described in more detail in the following sections, may be located in user equipment and Node B. On user equipment side, the MAC-e performs the new task of multiplexing upper layer data (e.g. MAC-d) data into the new enhanced transport channels and operating HARQ protocol transmitting entities.

Further, the MAC-e sub-layer may be terminated in the S-RNC during handover at the UTRAN side. Thus, the reordering buffer for the reordering functionality provided may also reside in the S-RNC.

### E-DCH MAC Architecture - UE side

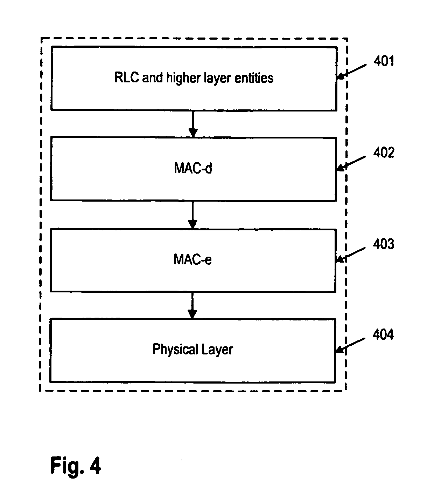

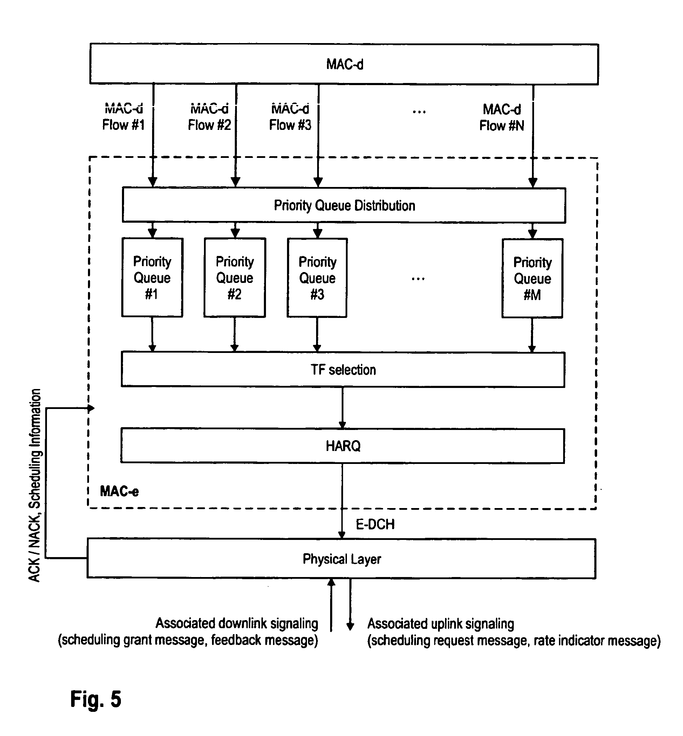

Fig. 4 shows the exemplary overall E-DCH MAC architecture on UE side. A new MAC functional entity, the MAC-e, is added to the MAC architecture of Release '99. The MAC-e entity is depicted in more detail in Fig. 5.

There are M different data flows (MAC-d) carrying data packets from different applications to be transmitted from UE to Node B. These data flows can have different QoS requirements (e.g. delay and error requirements) and may require different configuration of HARQ instances. Each MAC-d flow represents a logical unit to which specific physical channel (e.g. gain factor) and HARQ (e.g. maximum number of retransmissions) attributes can be assigned.

Further, MAC-d multiplexing is supported for an E-DCH, i.e. several logical channels with different priorities may be multiplexed onto the same MAC-d flow. Therefore the data from one MAC-d flow can be fed into different Priority Queues. The selection of an appropriate transport format for the transmission of data on E-DCH is done in the TF Selection entity which represents a function entity. The transport format selection is based on the available transmit power, priorities, e.g. logical channel priorities, and associated control signaling (HARQ and scheduling related control signaling) received from a Node B. The HARQ entity handles the retransmission functionality for the user. One HARQ entity supports multiple HARQ processes. The HARQ entity handles all HARQ related functionalities required. MAC-e entity receives scheduling information from Node B (network side) via L1 signaling as shown in Fig. 5.

### E-DCH MAC Architecture - UTRAN side

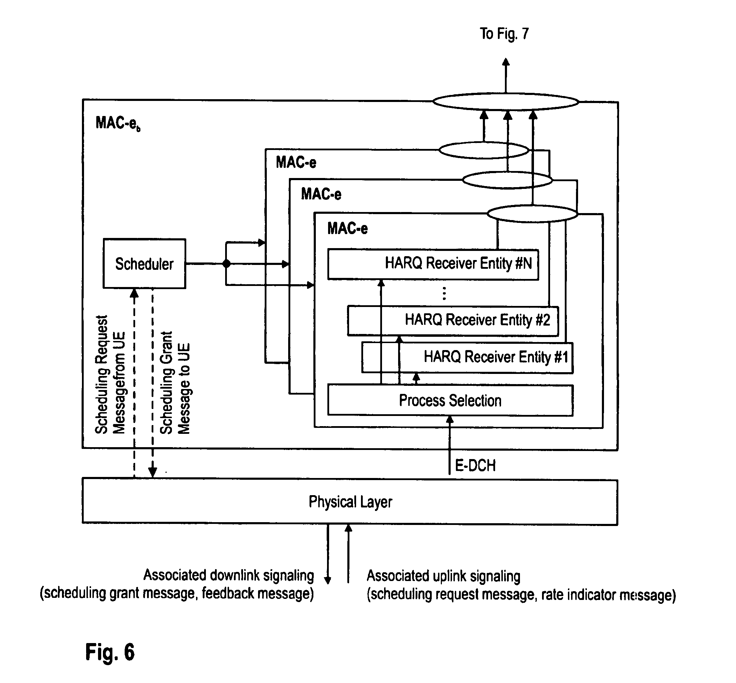

In soft handover operation it may be assume that the MAC-e entities are distributed across Node B (MAC-e_{b}) and S-RNC (MAC-eₛ) on UTRAN side. The scheduler in Node B chooses the active users among these entities and performs rate control through a commanded rate, suggested rate or TFC threshold that limits the active user (UE) to a subset of the TCFS. Every MAC-e entity corresponds to a user (UE). In Fig. 6 the Node B's MAC-e architecture is depicted in more detail. It can be noted that each HARQ Retransmission entity is assigned certain amount of the soft buffer memory for combining the bits of the packets from outstanding retransmissions. Once a packet is received successfully, it is forwarded to the reordering buffer providing the in-sequence delivery to upper layer.

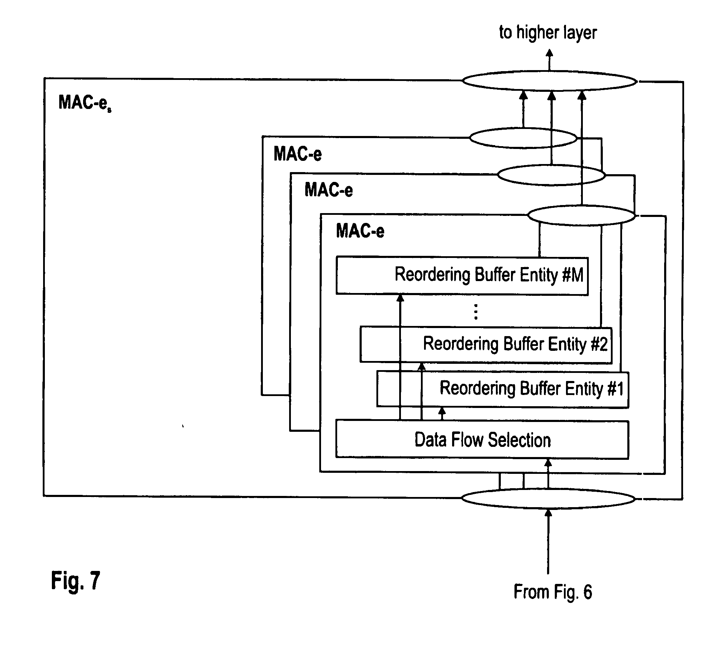

It may be assumed that the reordering buffer resides in S-RNC during soft handover. In Fig. 7 the S-RNC's MAC-e architecture which comprises the reordering buffer of the corresponding user (UE) is shown. The number of reordering buffers is equal to the number of data flows in the corresponding MAC-e entity on UE side. Data and control information is sent from all Node Bs within Active Set to S-RNC during soft handover.

It should be noted that the required soft buffer size depends on the used HARQ scheme, e.g. an HARQ scheme using incremental redundancy (IR) requires more soft buffer than one with chase combining (CC) [17].

### E-DCH Signaling

Associated control signaling required for the operation of a particular HARQ scheme consists of uplink and downlink signaling. Different implementation variants may have different requirements on the necessary signaling. Furthermore the signaling depends on uplink enhancements being considered. The following sections refer for exemplary purposes to the proposed system design in [11].

In order to enable Node B controlled scheduling (e.g. Node B controlled time and rate scheduling), UE has to send some request message for transmitting data to the Node B on the uplink. The request message may for example contain status information of a UE e.g. buffer status, power status, channel quality estimate. The request message is in the following referred to as Scheduling Information (SI). Based on this information Node B can estimate the noise rise and schedule the UE. With a grant message sent from Node B to the UE on the downlink, the Node B assigns the UE the TFCS with maximum data rate and the time intervals, the UE is allowed to send. The grant message is referred to as Scheduling Assignment (SA) in the following.

In the uplink the UE signals rate indicator message information (control information) that is necessary to decode the transmitted packets correctly to the Node B. This information may for example comprise transport block size (TBS), MCS level, etc. Furthermore, assuming that HARQ is applied, the UE signals HARQ related control information (e.g. Hybrid ARQ process number and a HARQ sequence number referred to as New Data Indicator (NDI) for UMTS Rel.5, Redundancy version (RV), Rate matching parameters etc.).

After reception and decoding of transmitted packets on enhanced uplink dedicated channel (E-DCH) the Node B provides feedback to the UE, i.e. informs the UE, if transmission was successful by respectively by sending ACK/NACK in the downlink.

### Mobility Management within Rel99/4/5 UTRAN

Before explaining some procedures connected to mobility management, some terms frequently used in the following are defined first.

A radio link may be defined as a logical association between single UE and a single UTRAN access point. Its physical realization comprises radio bearer transmissions.

A handover may be understood as a transfer of a UE connection from one radio bearer to another (hard handover) with a temporary break in connection or inclusion / exclusion of a radio bearer to / from UE connection so that UE is constantly connected UTRAN (soft handover). Soft handover is specific for networks employing Code Division Multiple Access (CDMA) technology. Handover execution may controlled by S-RNC in the mobile radio network when taking the present UTRAN architecture as an example.

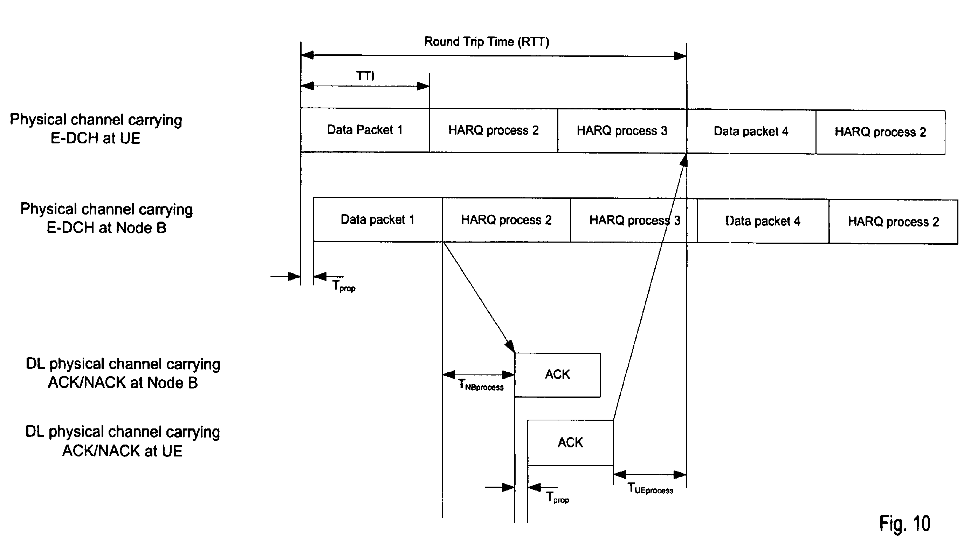

The active set associated to a UE comprises a set of radio links simultaneously involved in a specific communication service between UE and radio network. An active set update procedure may be employed to modify the active set of the communication between UE and UTRAN, for example during soft-handover. The procedure may comprise three functions: radio link addition, radio link removal and combined radio link addition and removal. The maximum number of simultaneous radio links is set to eight. New radio links are added to the active set once the pilot signal strengths of respective base stations exceed certain threshold relative to the pilot signal of the strongest member within active set. The addition of a new radio link is shown for exemplary purposes in Fig. 10.

A radio link is removed from the active set once the pilot signal strength of the respective base station exceeds certain threshold relative to the strongest member of the active set. Threshold for radio link addition is typically chosen to be higher than that for the radio link deletion. Hence, addition and removal events form a hysteresis with respect to pilot signal strengths.

Pilot signal measurements may be reported to the network (e.g. to S-RNC) from UE by means of RRC signaling. Before sending measurement results, some filtering is usually performed to average out the fast fading. Typical filtering duration may be about 200 ms contributing to handover delay. Based on measurement results, the network (e.g. S-RNC) may decide to trigger the execution of one of the functions of active set update procedure (addition / removal of a Node B to / from current Active Set).

### E-DCH ― Node B controlled scheduling

Node B controlled scheduling is one of the technical features for E-DCH which is foreseen to enable more efficient use of the uplink power resource in order to provide a higher cell throughput in the uplink and to increase the coverage. The term "Node B controlled scheduling" denotes the possibility for the Node B to control, within the limits set by the RNC, the set of TFCs from which the UE may choose a suitable TFC. The set of TFCs from which the UE may choose autonomously a TFC is in the following referred to as "Node B controlled TFC subset".

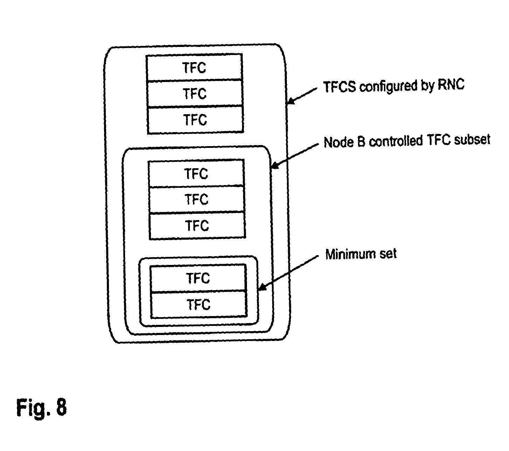

The "Node B controlled TFC subset" is a subset of the TFCS configured by RNC as seen in Fig. 8. The UE selects a suitable TFC from the "Node B controlled TFC subset" employing the Rel5 TFC selection algorithm. Any TFC in the "Node B controlled TFC subset" might be selected by the UE, provided there is sufficient power margin, sufficient data available and TFC is not in the blocked state. Two fundamental approaches to scheduling UE transmission for the E-DCH exist. The scheduling schemes can all be viewed as management of the TFC selection in the UE and mainly differs in how the Node B can influence this process and the associated signaling requirements.

### Node B controlled Rate Scheduling

The principle of this scheduling approach is to allow Node B to control and restrict the transport format combination selection of the user equipment by fast TFCS restriction control. A Node B may expand/reduce the "Node B controlled subset", which user equipment can choose autonomously on suitable transport format combination from, by Layer-1 signaling. In Node B controlled rate scheduling all uplink transmissions may occur in parallel but at a rate low enough such that the noise rise threshold at the Node B is not exceeded. Hence, transmissions from different user equipments may overlap in time. With Rate scheduling a Node B can only restrict the uplink TFCS but does not have any control of the time when UEs are transmitting data on the E-DCH. Due to Node B being unaware of the number of UEs transmitting at the same time no precise control of the uplink noise rise in the cell may be possible (see 3GPP TR 25.896: "Feasibility study for Enhanced Uplink for UTRA FDD (Release 6)", version 1.0.0, available at http://www.3gpp.org).

Two new Layer-1 messages are introduced in order to enable the transport format combination control by Layer-1 signaling between the Node B and the user equipment. A Rate Request (RR) may be sent in the uplink by the user equipment to the Node B. With the RR the user equipment can request the Node B to expand/reduce the "Node controlled TFC Subset" by one step. Further, a Rate Grant (RG) may be sent in the downlink by the Node B to the user equipment. Using the RG, the Node B may change the "Node B controlled TFC Subset", e.g. by sending up/down commands. The new "Node B controlled TFC Subset" is valid until the next time it is updated.

### Node B controlled Rate and Time Scheduling

The basic principle of Node B controlled time and rate scheduling is to allow (theoretically only) a subset of the user equipments to transmit at a given time, such that the desired total noise rise at the Node B is not exceeded. Instead of sending up/down commands to expand/reduce the "Node B controlled TFC Subset" by one step, a Node B may update the transport format combination subset to any allowed value through explicit signaling, e.g. by sending a TFCS indicator (which could be a pointer).

Furthermore, a Node B may set the start time and the validity period a user equipment is allowed to transmit. Updates of the "Node B controlled TFC Subsets" for different user equipments may be coordinated by the scheduler in order to avoid transmissions from multiple user equipments overlapping in time to the extent possible. In the uplink of CDMA systems, simultaneous transmissions always interfere with each other. Therefore by controlling the number of user equipments, transmitting simultaneously data on the E-DCH, Node B may have more precise control of the uplink interference level in the cell. The Node B scheduler may decide which user equipments are allowed to transmit and the corresponding TFCS indicator on a per transmission time interval (TTI) basis based on, for example, buffer status of the user equipment, power status of the user equipment and available interference Rise over Thermal (RoT) margin at the Node B.

Two new Layer-1 messages are introduced in order to support Node B controlled time and rate scheduling. A Scheduling Information Update (SI) may be sent in the uplink by the user equipment to the Node B. If user equipment finds a need for sending scheduling request to Node B (for example new data occurs in user equipment buffer), a user equipment may transmit required scheduling information. With this scheduling information the user equipment provides Node B information on its status, for example its buffer occupancy and available transmit power.

A Scheduling assignment (SA) may be transmitted in the downlink from a Node B to a user equipment. Upon receiving the scheduling request the Node B may schedule a user equipment based on the scheduling information (SI) and parameters like available RoT margin at the Node B. In the Scheduling Assignment (SA) the Node B may signal the TFCS indicator and subsequent transmission start time and validity period to be used by the user equipment.

The usage of either rate or time and rate scheduling is of course restricted by the available power, as the E-DCH will have to co-exist with a mix of other transmissions by that UE and other UEs in the uplink. The co-existence of the different scheduling modes may provide flexibility in serving different traffic types. For example, the applications demanding lower data rates may be sent over E-DCH in rate controlled mode while the applications demanding higher data rate may be sent over E-DCH in time and rate controlled mode.

### E-DCH - Hybrid ARQ

Node B controlled Hybrid ARQ allows for rapid retransmissions of erroneously received data packets. Fast retransmissions between UE and Node B reduce the number of higher layer retransmissions and the associated delays, thus the quality perceived by the end user is improved. A protocol structure with multiple stop-and-wait (SAW) hybrid ARQ processes can be used for E-DCH, similar to the scheme employed for the downlink HS-DSCH in HSDPA, but with appropriate modifications motivated by the differences between uplink and downlink.

An N-channel SAW scheme consists of N parallel HARQ process, each process works as a stop-and-wait retransmission protocols, which corresponds to a selective repeat ARQ (SR) with window size 1. Using this scheme it may be assumed that UE can only transmit data on a single HARQ process each TTI. In Fig. 10 an example N-channel SAW protocol with N=3 HARQ processes is illustrated. The UE transmits data packet 1 on E-DCH on the uplink to the Node B. For the transmission the first HARQ process is used. After a certain amount of time, the propagation delay of the air interface Tₚᵣₒₚ, the Node B receives the packet and starts demodulating and decoding. Depending on whether the decoding was successful an ACK/NACK is sent in the downlink to the UE. In this example Node B sends an ACK after T_{NBprocess}, which denotes the time required for decoding and processing the received packet in the Node B, to the UE.

Based on the feedback on the downlink the UE decides whether it resends the data packet or transmits another, new data packet. The processing time available for the UE between receiving the Acknowledgement and transmitting the next TTl in the same HARQ process is denoted T_{UEprocess.} In the example UE transmits data packet 4 upon receiving the ACK. The round trip time (RTT) denotes the time between transmission of a data packet in the uplink and sending a retransmission of that packet or a new data packet upon receiving the ACK/NACK feedback for that packet. To avoid idle periods due to lack of available HARQ processes, the number N of HARQ processes may be advantageously matched to the HARQ round trip time (RTT).

Considering known and unknown transmission timing, it may be distinguished between synchronous and asynchronous transmission. A retransmission protocol with asynchronous uplink uses an explicit signaling to identify a data block or the HARQ process, whereas in a protocol with synchronous uplink, a data block or HARQ process is identified based on the time point a data block is received.

The UE may for example signal the HARQ process number explicitly in a protocol with asynchronous uplink in order to ensure correct soft combining of data packets in case of a retransmission. The advantage of a HARQ retransmission protocol with asynchronous uplink is the flexibility, which is given to the system. Node B scheduler for example can assign UEs a time period and HARQ processes for the transmission of data on the E-DCH based on the interference situation in the cell and further parameters like priority or QoS parameters of the corresponding E-DCH service.

A retransmission protocol with asynchronous downlink uses sequence numbers (SN) or other explicit identification of the feedback messages whereas protocols with synchronous downlink identifies the feedback messages based on the time when they are received, as for example in HSDPA (feedback is sent on the HS-DPCCH after a certain time instant upon having received the HS-DSCH).

For E-DCH a synchronous HARQ protocol is used, where the HARQ process number can be derived from the CFN (Connection Frame Number). This implies that retransmissions are sent at a predefined time instance after receiving negative feedback from the Node B (e.g. 4 TTls after receiving the NACK). Employing a retransmission protocol with synchronous uplink transmissions Node B exactly knows when the retransmissions are sent by the UE. Hence the Node B may reserve uplink resources, which enables the Node B to more precisely control on the uplink interference in the cell. Further, the retransmissions may use the same TF as the initial transmission.

In the time and rate controlled scheduling mode Node B schedules the initial transmission - as well as the retransmissions sent on the E-DCH assuming asynchronous retransmissions. In case retransmissions are sent in a synchronous manner, Node B doesn't need to schedule the retransmissions anymore, which reduces the signaling overhead and the processing time for the scheduler in Node B significantly. For E-DCH it was also decided to send the HARQ feedback (ACK/NACK) in a synchronous manner, e.g. after a certain time instant upon having received the E-DCH data packet.

The two fundamental forms of HARQ have been mentioned above: Chase Combining (CC) and incremental redundancy (IR). In Chase Combining, each retransmission repeats the first transmission or part of it. In IR, each retransmission provides new code bits from the mother code to build a lower rate code. While Chase Combining is sufficient to make Adaptive Modulation and Coding (AMC) robust, IR offers the potential for better performance with high initial and successive code rates, at higher SNR estimation error and FER operating points (i.e., a greater probability that a transmission beyond the first will be needed), albeit at the cost of additional memory and decoding complexity.

A systematic turbo encoded data packet (E-DCH data packet) contains the original information bits (systematic bits) and additional parity bits (redundancy). The character S is commonly used to denote the systematic bits and the character P for denoting the parity bits. As already mentioned there are self-decodable and non-self-decodable retransmissions in an IR scheme. The use of non-self decodable retransmissions provides the most gain with incremental redundancy.

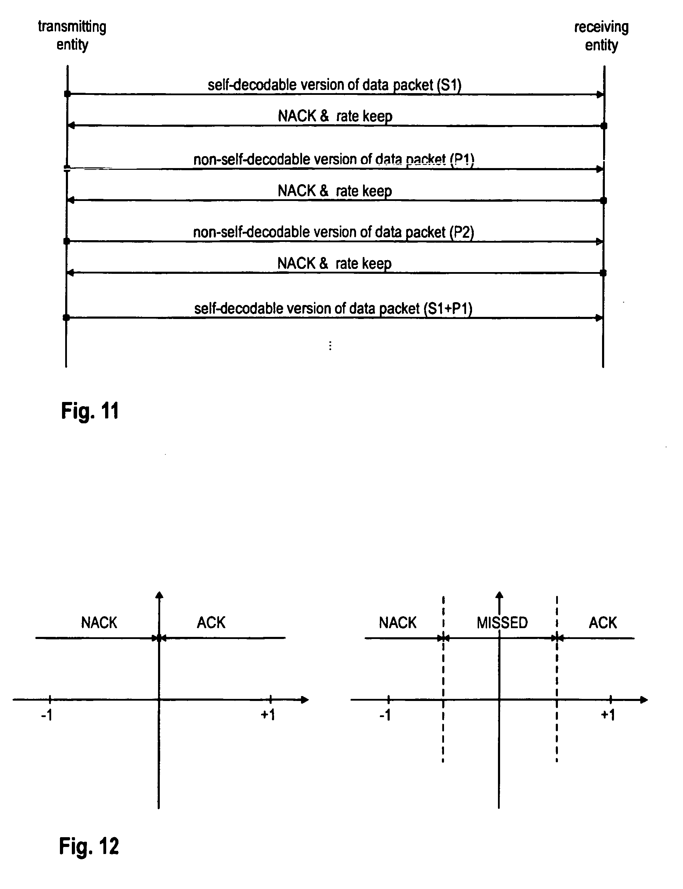

For E-DCH there are 4 different redundancy versions of a data packet (PDU) for E-DCH, 2 self-decodable and 2 non-self decodable. The first transmission should always be a self-decodable version of the PDU containing at least the systematic bits. Fig. 11 shows an exemplary HARQ IR scheme for E-DCH. In the first transmission only systematic bits are transmitted from the UE to the Node B. The first retransmission contains the first set of parity bits, which is denoted as P1. The parity bits are added to the already received systematic bits in the Node B before decoding (soft-combining). In case the decoding fails, the Node B requests a further retransmission. In the second retransmission the second set of parity bits are transmitted to the Node B (P2). The third retransmission contains the systematic bits and the first set of parity bits (P1). In the given example the initial transmission and the second retransmission are self-decodable, the first and third retransmissions are non-self decodable.

The usage of non-self decodable retransmissions provides the most gain with incremental redundancy as already mentioned before. The first or initial transmission of a data packet should be always self-decodable and include the systematic bits. If the received signal of the HARQ related control information, which comprises information necessary for the processing of the data packet, is too weak, or interference is present, the receiving entity (Node B) could be unable to perform a reliable detection of the HARQ control information.

It is assumed that some kind of threshold is applied, such that the receiver can determine when reliable information can be obtained or not. When Node B cannot detect the HARQ control information, sent on a control channel, it is unable to process the received data packet on the E-DCH. A CRC for the related control information, e.g. on E-DPCCH, can be for example used in order to determine unreliable detection of the control information.

In case the initial transmission could not be detected by the receiver (HARQ related control information couldn't be reliable detected) a NACK is sent to the HARQ transmitter. When using an incremental redundancy scheme as shown in Fig. 11, then UE will transmit a non-self decodable redundancy version (P1). Since Node B has discarded the initial transmission (not detected), a decoding of the packet is not possible after the first retransmission. Node B has to wait till UE retransmit a self-decodable transmission including the systematic bits. In Fig. 11 a correct decoding is only possible after the third retransmission. Hence in case a Node B does not detect the first transmission, a correct decoding of the data packet is only possible after the third retransmission, which leads to a significant delay.

WO 03/55122 A1 relates to a method for operating a hybrid automatic repeat request communication system wherein it is determine whether a receiver can process a data packet, and a self decode request associated with the data packet is sent based on the determination. The self-decode request may indicate to the transmitter to send a self-decodable data packet or a non-self-decodable data packet in a retransmission for an unsuccessfully decoded data packet. The decision whether to request a self-decodable or a non-self-decodable data packet thereby depends on the hybrid automatic repeat request memory buffer, a decoder metric or on a channel quality attribute.

### SUMMARY OF THE INVENTION

The object of the invention is to optimize an HARQ protocol using incremental redundancy in view of the problems outlined above.

The object is solved by the subject matter of the independent claims. Advantageous embodiments of the invention are subject matters to the dependent claims.

One of the main aspects of the invention is to overcome described problems by indicating the HARQ transmitter, that the initial transmission was missed (not detected) or heavily corrupted. Another aspect of the invention is the proposal of a method not requiring the introduction of a new HARQ feedback level to communicate the miss of the initial transmission or its heavy corruption, but use the combination of scheduling related control signaling and HARQ feedback information to provide the necessary feedback to indicate the additional HARQ feedback level to the transmitter. Thus, a ternary feedback may be provided in a backward-compatible manner.

According to one embodiment, the invention provides a HARQ method using incremental redundancy and providing synchronous retransmissions. A receiving entity may receive control information from a transmitting entity. The control information may enable the receiving entity to receive a self-decodable version of a data packet. Further, the self-decodable version of the data packet is received by the receiving entity. The receiving entity may transmit feedback to the transmitting entity.

The feedback provided by the receiving entity indicates the following alternative instructions to the transmitting entity. The transmitting entity may be instructed by the feedback to transmit a self-decodable version of the data packet. This is applicable to situations where the receiving entity has unsuccessfully decoded the control information.

If the self-decodable version of the data packet has not been decoded successfully by the receiving entity, the transmitting entity may be instructed to transmit a non-self-decodable version of the data packet providing incremental redundancy information for the self-decodable version of the data packet.

Moreover, if the self-decodable version of the data packet has been decoded successfully by the receiving entity, the transmitting entity is instructed by the receiving entity to transmit a self-decodable version of another data packet, i.e. so to say the next data packet.

According to this embodiment of the invention, the feedback is communicated to the transmitting entity by a combination of scheduling related control signaling and HARQ feedback signaling.

This has the advantage that no explicit ternary HARQ feedback needs to be defined. Instead, "unused" combinations of HARQ feedback messages, which are commonly defined as acknowledgement (ACK) and negative acknowledgement (NACK), and scheduling related control signaling (e.g. rate up, rate down and rate keep commands) may be used to communicate the different feedback levels.

In a variation of this embodiment, the ternary feedback is thus communicated to the transmitting entity by a combination of rate up, rate keep and rate down commands of scheduling related control signaling and acknowledgements and negative acknowledgements of the HARQ feedback signaling.

In an exemplary embodiment of the invention, the following combinations of HARQ feedback messages and scheduling related control signaling messages is chosen. The instruction to transmit a self-decodable version of the data packet is communicated by a combination of a negative acknowledgment and a rate up or rate down command. Further, the instruction to transmit a non-self-decodable version of the data packet providing incremental redundancy information for the self-decodable version of the data packet is indicated by a combination of a negative acknowledgement and a rate keep command, and the instruction to transmit a self-decodable version of another data packet is indicated by a combination of a acknowledgement and an arbitrary command of the scheduling related control signaling.

In a further embodiment of the invention, the receiving entity may received control information enabling the receiving entity to receive a self-decodable version of the data packet, a non-self-decodable version of the data packet or a self-decodable version of another data packet from the transmitting entity in response to the feedback and may further receive a self-decodable version of the data packet, a non-self-decodable version of the data packet or a self-decodable version of another data packet from the transmitting entity in response to the feedback.

According to a further embodiment of the invention, the scheduling related control signaling and the HARQ feedback signaling are received via separate control channels.

In a further embodiment of the invention the control information enabling the reception of an arbitrary version of a data packet is transmitted via a control channel and the different versions of a data packet, i.e. the self-decodable versions and non-self-decodable versions of the data packet, are transmitted via a data channel.

In another exemplary embodiment of the invention, the receiving entity may further receive a non-self-decodable version of the data packet, and may store and soft combine the received non-self-decodable version of the data packet and previously received versions of the data packet in a soft buffer at the receiving entity thereby forming a combined data packet. Next, the receiving entity may try to decode the combined data packet.

In this embodiment, the feedback transmitted by the receiving entity to the transmitting entity may instruct the transmitting entity to transmit a self-decodable version of the data packet, if the receiving entity has not successfully decoded the combined data packet and if the fill status of the soft buffer is above a predetermined threshold.

Another embodiment of the invention foresees that the self-decodable version of the data packet received from the transmitting entity is decoded in a soft decoder of the receiving entity, wherein a probability metric is generated during the decoding process. If the data packet received from the transmitting entity has not been decoded correctly and if the probability metric is below a predetermined threshold, the feedback transmitted by the receiving entity instructs the transmitting entity to transmit a self-decodable version of the data packet. Alternatively, the feedback transmitted by the receiving entity instructs the transmitting entity to transmit a non-self-decodable version of the data packet, if the data packet received from the transmitting entity has not been decoded correctly and if the probability metric is higher than or equal to the predetermined threshold.

In an exemplary variation of this embodiment the probability metric is a function of the log likelihood ratios of the soft decoder output after decoding a combined data packet.

In a further embodiment of the invention, the self-decodable version of the data packet comprises the systematic bits and is transmitted via a communication channel. The receiving entity may measure the channel quality when receiving the self-decodable version of the data packet. According to this embodiment, the feedback transmitted by the receiving entity instructs the transmitting entity to transmit a self-decodable version of the data packet, if the channel quality is below a predetermined threshold value.

As indicated above, the type of feedback, i.e. the instructions for the transmitting entity is based on whether the control information has been received successfully or not. According to another embodiment, the determination of whether the control information has been decoded correctly is based on a CRC check, on the received SIR of the control channel and /or based on the use of an energy metric.

In a further embodiment of the invention, a retransmission of a self-decodable version of the data packet is transmitted at the same power level as the initial transmission of the self-decodable version of the data packet.

Further, it may be foreseen that a non-self-decodable version of the data packet is transmitted at a lower power level than a self-decodable data packet.

In another embodiment, the receiving entity is a base station and the transmitting entity is a mobile terminal in a mobile communication system, i.e. HARQ method according to the different embodiments above is employed for uplink transmissions, for example on an E-DCH.

Further, an exemplary embodiment of the invention is related to a receiving entity in a mobile communication system providing an HARQ retransmission protocol using incremental redundancy. The receiving entity may comprise a receiver for receiving control information from a transmitting entity, wherein the control information enables the receiving entity to receive a self-decodable version of a data packet, and for receiving the self-decodable version of the data packet at the receiving entity, and a transmitter for transmitting feedback to the transmitting entity, wherein the feedback instructs the transmitting entity.

The transmitter may further be adapted to transmit a self-decodable version of the data packet, if the receiving entity has unsuccessfully decoded the control information, to transmit a non-self-decodable version of the data packet providing incremental redundancy information for the self-decodable version of the data packet, if the self-decodable version of the data packet has not been decoded successfully by the receiving entity, or to transmit a self-decodable version of another data packet, if the self-decodable version of the data packet has been decoded successfully by the receiving entity.

Also according to this embodiment of the invention, the receiving entity is adapted to communicate the feedback to the transmitting entity by a combination of scheduling related control signaling and HARQ feedback signaling.

In a further embodiment of the invention, a receiving entity further comprising means to perform the HARQ method according to the various embodiments and variations thereof described above is provided.

Another embodiment of the invention provides a transmitting entity in a mobile communication system providing an HARQ retransmission protocol using incremental redundancy. This transmitting entity may comprise a transmitter for transmitting control information to a receiving entity, wherein the control information enables the receiving entity to receive a self-decodable version of a data packet, and for transmitting the self-decodable data packet to the receiving entity, and a receiver for receiving feedback from the receiving entity.

The feedback instructs the transmitting entity to transmit a self-decodable version of the data packet, if the receiving entity has unsuccessfully decoded the control information, to transmit a non-self-decodable version of the data packet providing incremental redundancy information for the self-decodable version of the data packet, if the self-decodable version of the data packet has not been decoded successfully by the receiving entity, or to transmit a self-decodable version of another data packet, if the self-decodable version of the data packet has been decoded successfully by the receiving entity. Further, the transmitting entity is adapted to receive the feedback in form of a combination of scheduling related control signaling and HARQ feedback signaling.

In another embodiment of the invention, the transmitting entity may further comprise means to perform the HARQ method according to the various embodiments and the modifications thereof described above.

Further, another exemplary embodiment of the invention provides a mobile communication system comprising a receiving entity and a transmitting entity according the embodiments of the invention described above.

Further embodiments of the invention relate to the implementation of the various embodiments above in hardware and software. In this respect, another embodiment of the invention provides a computer-readable storage medium for storing instructions that, when executed by a processor of a receiving entity, cause the receiving entity to provide an HARQ retransmission protocol using incremental redundancy.

The receiving entity may be caused to provide HARQ retransmission protocol using incremental redundancy by receiving control information from a transmitting entity, wherein the control information enables the receiving entity to receive a self-decodable version of a data packet, receiving the self-decodable version of the data packet at the receiving entity, and transmitting feedback to the transmitting entity. The feedback instructs the transmitting entity to transmit a self-decodable version of the data packet, if the receiving entity has unsuccessfully decoded the control information, to transmit a non-self-decodable version of the data packet providing incremental redundancy information for the self-decodable data packet; if the self-decodable version of the data packet has not been decoded successfully by the receiving entity, or to transmit a self-decodable version of another data packet, if the self-decodable version of the data packet has been decoded successfully by the receiving entity. Further, the feedback is communicated to the transmitting entity by a combination of scheduling related control signaling and HARQ feedback signaling.

A further embodiment provides the computer-readable storage medium further storing instructions that, when executed by the processor of the receiving entity, cause the receiving entity to perform the HARQ method according to the various embodiments and variations thereof described above.

Another embodiment is related to a computer-readable storage medium for storing instructions that, when executed by a processor of a transmitting entity, cause the transmitting entity to provide an HARQ retransmission protocol using incremental redundancy. The transmitting entity is caused to provide HARQ retransmission protocol using incremental redundancy by transmitting control information to a receiving entity, wherein the control information enables the receiving entity to receive a self-decodable version of a data packet, transmitting the self-decodable version of the data packet to the receiving entity, and receiving feedback from the receiving entity.

Again, the feedback instructs the transmitting entity to transmit a self-decodable version of the data packet, if the receiving entity has unsuccessfully decoded the control information, to transmit a non-self-decodable version of the data packet providing incremental redundancy information for the self-decodable version of the data packet, if the self-decodable version of the data packet has not been decoded successfully by the receiving entity, or to transmit a self-decodable version of another data packet, if the self-decodable version of the data packet has been decoded successfully by the receiving entity.

Moreover, the feedback is received in form of a combination of scheduling related control signaling and HARQ feedback signaling.

A further embodiment provides the computer-readable storage medium further storing instructions that, when executed by the processor of the transmitting entity, cause the transmitting entity to perform the HARQ method according to the various embodiments and variations thereof described above.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows a Drift and a Serving Radio Subsystem,
- **Fig. 4**: shows the E-DCH MAC architecture at a user equipment,

- **Fig. 5**: shows the MAC-e architecture at a user equipment**,**
- **Fig. 6**: shows the MAC-e_{b} architecture at a Node B,
- **Fig. 7**: shows the MAC-e**ₛ** architecture at a RNC,
- **Fig. 8**: shows transport format combination sets for Node B controlled scheduling,

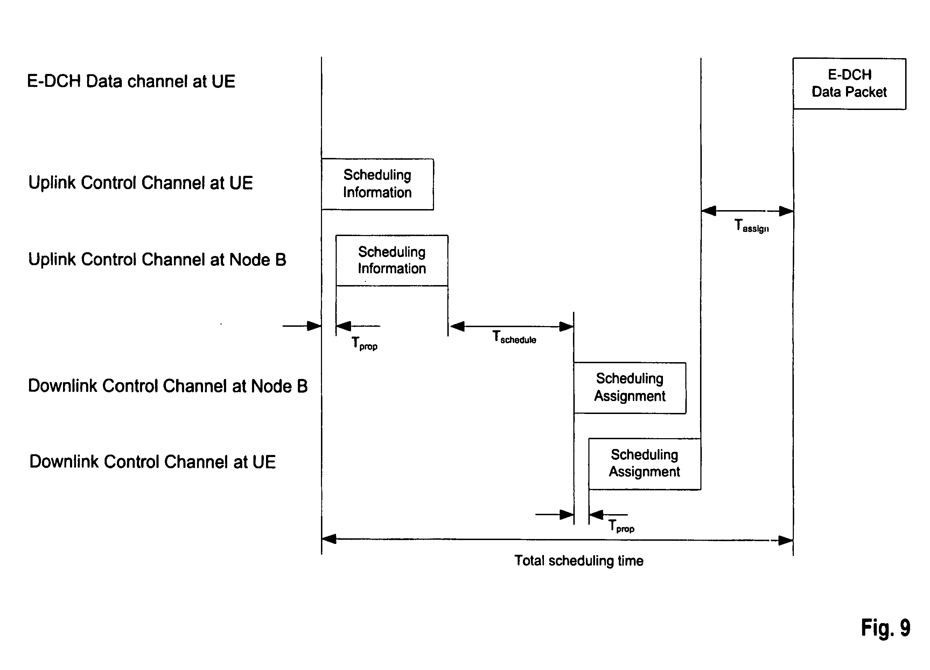

- **Fig. 9**: shows the operation of an E-DCH in the time and rate controlled scheduling mode,
- **Fig. 10**: shows an exemplary operation of a 3-channel stop-and-wait (SAW) HARQ protocol,
- **Fig. 11**: shows an exemplary HARQ scheme using incremental redundancy (IR),
- **Fig. 12**: shows an exemplary mapping of 2-level HARQ feedback and 3-level HARQ feedback,
- **Fig. 13**: shows an exemplary mapping of a combination of HARQ feedback signaling and scheduling related control signaling to provide a ternary HARQ feedback according to an exemplary embodiment of the invention,
- **Fig 14**: shows an exemplary operation of a HARQ scheme using incremental redundancy and a combination of HARQ feedback signaling and scheduling related control signaling to provide a ternary HARQ feedback according to an exemplary embodiment of the invention, and
- **Fig. 15**: shows an exemplary operation of a HARQ scheme using incremental redundancy and a combination of HARQ feedback signaling and scheduling related control signaling to provide a ternary HARQ feedback according to a further exemplary embodiment of the invention.

### DETAILED DESCRIPTION OF THE INVENTION

The following paragraphs will describe various embodiments of the invention. For exemplary purposes only, most of the embodiments are outlined in relation to a UMTS communication system and the terminology used in the subsequent sections mainly relates to the UMTS terminology. However, the used terminology and the description of the embodiments with respect to a UMTS architecture is not intended to limit the principles and ideas of the inventions to such systems.

Also the detailed explanations given in the Technical Background section above are merely intended to better understand the mostly UMTS specific exemplary embodiments described in the following and should not be understood as limiting the invention to the described specific implementations of processes and functions in the mobile communication network.

The ideas and principles that will be outlined in the subsequent sections may be applicable to any HARQ protocol using incremental redundancy.

In the embodiments of the invention outlined in the Summary of the Invention-section above and also in the subsequent embodiments and description, the terms "self-decodable version of a data packet" and "non-self-decodable version of a data packet" have been/will be used frequently. In the context of this description, the term self-decodable version of a data packet should be understood as data comprising at least the systematic bits of the data packet. Thus, it is not required that self-decodable versions of a single data packet are identical. Though different self-decodable versions of a single data packet comprise the systematic bits, the may differ for example in the parity bits included in the different self-decodable versions of the data packet.

Due to all self-decodable versions of the data packet comprise at least the systematic bits of the data packet, the self-decodable versions of a data packet may be decoded independent from previous transmissions of this data packet.

Further, the term non-self-decodable version of the data packet should be understood as to refer to data, which cannot be decoded independently from previous transmissions of this data packet (systematic bits). A non self-decodable version of a data packet comprises at least a part of the parity bits of the encoded data packet. Commonly, these non-self-decodable versions of a data packet are transmitted by the transmitting after not successfully decoding a self-decodable version of the data packet at the receiving entity, i.e. after receiving a feedback indicating unsuccessful decoding at the transmitting entity in order to decrease the code rate.

As a consequence, a single HARQ process providing a single data packet may include the transmission of different self-decodable and non-self-decodable versions of the data packet depending on the HARQ feedback provided by the receiving entity.

In the following exemplary embodiments relate - for exemplary purposes only - to uplink transmissions on the E-DCH in UMTS. As indicated in the technical background section above, in case the initial transmission could not be detected by the receiver (HARQ related control information couldn't be reliable detected) a NACK is sent to the HARQ transmitter. When using an incremental redundancy scheme as shown in Fig. 11, then UE will transmit a non-self decodable redundancy version (P1). Since Node B has "discarded" the initial transmission (not detected), a decoding of the packet is not possible after the first retransmission. Node B has to wait until the UE retransmit a self-decodable version of the data packet including the systematic bits. In Fig. 11 a correct decoding is only possible after the third retransmission. Hence in case a Node B does not detect the first transmission, i.e. the first self-decodable version of the data packet initially transmitted, a correct decoding of the data packet is only possible after the third retransmission, which leads to a significant delay.

Therefore in order to change UE behavior depending on whether the first transmission was detected by the Node B or not, the UE may be aware of the detection status of the first transmission. In case UE would notice by means of feedback transmitted from the receiver that the initial transmission was not detected, it may retransmit a self-decodable version of the data packet again. This would significantly reduce the time required for a successful decoding.

Thus, for example in cases where the Node B has missed the control information from the UE enabling the Node B to receive the first transmission of the data packet, the feedback of the Node B may indicate this situation and the UE may send a self-decodable version of the data packet as the first retransmission.

As indicated above, the control information comprises information necessary for the processing of the data packet. If the received signal of of this control information is too weak, or interference is present, the receiving entity (Node B) may not be able to perform a reliable detection of the HARQ control information.

Some kind of threshold may thus be applied which allows the receiver determining when reliable information can be obtained or not. When Node B cannot detect the HARQ control information sent on a control channel (E-DPCCH) it is unable to process the received data packet on the E-DCH. A CRC for the related control information, e.g. on E-DPCCH, may be for example used in order to determine unreliable detection of the control information.

As an alternative for the CRC the received SIR of the control channel can be used as an indicator of an unreliable detection of the control channel. Furthermore an energy metric can be applied instead of a CRC to detect a missed transmission. The energy detection will be done on the control channel (E-DPCCH) and the data channel (E-DPDCH) since they are commonly transmitted at the same time. The detected energy on these both channels could be for example compared against a predefined threshold. As the data rate increases the detection of a missed transmission becomes even simpler since the power offset for the E-DPDCH increases with higher data rates.

The idea of allowing a receiver to signal that It wishes a self-decodable version of the data packet may also be applied to situations when the data of the initial transmission (first transmission of a self-decodable version of a data packet) is heavily corrupted. When the systematic bits are corrupted such that there is no real benefit from additional redundancy, it may be better to retransmit the systematic bits within a self-decodable version of the data packet again.

In order to determine by the receiver whether to request the retransmission of a self-decodable version of the data packet or whether to request additional redundancy bits (non-self-decodable version of the data packet), the receiver may measure the reception quality of the first transmission. This decision may for example be based on the soft decisions output (log likelihood ratios) of the decoder in the receiver.

The log likelihood ratio (LLR) of a bit is generally defined as the logarithm of the ratio of probabilities. Therefore it carries some information about the reliability of the bit decision. The sign of the LLR represents the bit decision ('-' equals 1 and '+' equals 0). The absolute value of a LLR represents the reliability of the bit decision. If the bit decision for example is not very confident, the absolute value of the LLR is very small. Furthermore the reception quality includes, for example, received signal strength or signal to interference ratio (SIR) or the channel quality.

A function of the log likelihood ratios of the soft decoder output after decoding a combined data packet may be thus used to determine when to resend a self-decodable version of the data packet or when to request incremental redundancy information from the UE. The function of the log likelihood ratios should form a probability metric indicating the overall certainty in decoding the data packet from the individual LLRs. This probability metric may for example be compared with a threshold for determining which type of feedback is provided to the UE i.e. whether a self-decodable version or a non-self-decodable version of a data packet is requested.

In case the HARQ receiver (Node B) sends only ACK/NACK feedback, the UE cannot distinguish between the case where decoding was not successful and the case when the transmission was not detected by the Node B (or when the reception quality of the first transmission was below a predetermined threshold).

One possibility to make UE aware of a situation when the initial transmission has been not detected is to introduce a third level for the HARQ feedback. In conventional systems, an ACK is transmitted when the packet could be decoded correctly and a NACK is transmitted in case the packet was not decoded correctly.

According to one embodiment of the invention, in case a Node B may not detect the first transmission or the systematic bits are heavily corrupted, it sends a third feedback level, e.g. "MISSED", to the UE. This feedback indicates or instructs the UE to transmit a self-decodable version of the data packet again.

It has been indicated above that the information on whether the control information for a first transmission has been not successfully decoded or whether the first transmission of a data packet (self-decodable version) has been missed is equivalent. This is certainly true for E-DCH in UMTS systems. When employing an E-DCH, at least a Retransmission Sequence Number, the so called RSN is transmitted within the control information from the UE to the Node B via a separate control channel prior to the transmission of the first transmission.

The RSN allows the HARQ entity within the Node B's MAC-e (see Fig. 6) determining whether a specific HARQ process provides a new data packet, i.e. a first transmission of a data packet or whether a retransmission for a previously received and erroneously decoded data packet is provided. The RSN may further determine the redundancy version of a data packet. This mechanism also ensures the HARQ protocol's robustness in case of a misinterpretation of HARQ feedback by the UE.

Thus, for E-DCH control information comprising the RSN is communicated to the Node B on a separate control channel (E-DPCCH) in parallel to the E-DCH data packet on the E-DPDCH.

Obviously, other communication system specific implementations may not require that equivalent control information is communicated. Alternatively, the control information may be included to the data transporting the different versions of the data packet, i.e. the control information may be communicated via the same channel as the user data.

It has been indicated above, that a misinterpretation of HARQ feedback signaling may lead to protocol instability if no appropriate countermeasures are introduced. IN this respect it should be noticed that the introduction of a third level feedback (ACK/NACK, MISSED) will require a higher transmission power compared to the 2-level feedback assuming the same reliability of the detection of the feedback signals should be achieved. Fig. 12 shows exemplary detection threshold at the UE side for a 2-level and 3-level HARQ feedback on the physical layer in a conventional system. The figure shows the decision areas for the different mappings. On the left side of the figure the decision areas are shown for a 2-level feedback (ACK/NACK), whereas on the right hand side the decision areas for a 3-level feedback are shown (ACK/MISSED/NACK). It can be derived from the figures, that a higher transmission power is required in order to achieve the same signaling reliability, i.e. some probability of misinterpretation.

For example in case Node B could not detect the initial transmission due to errors on the HARQ control signaling or the initial transmission was heavily corrupted, the UE may transmit a self-decodable version of the data packet instead of - for example - transmitting a non-self-decodable version of the data packet providing incremental redundancy. The Node B may indicate to the UE, that it requests the transmission of a self-decodable version of the data packet including the systematic bits. When introducing a third level of HARQ feedback, e.g. MISSED, a higher transmission power is needed in order to achieve the same signaling reliability.

One aspect of the invention is to propose a method, which does not require the introduction of a third-level to HARQ feedback in order to request the retransmission of a self-decodable redundancy version. Instead, a ternary feedback is achieved by a combination of (conventional) HARQ feedback signaling and scheduling related control signaling.

As explained previously, scheduling grants transmitted from the Node B scheduler, can either contain an up/keep/down command (also referred to as relative grant) or can explicitly indicate the maximum uplink resources the UE is allowed to use (also referred to as absolute grant). When using a synchronous HARQ protocol the timing of the retransmissions is known to the scheduler. Thus, the retransmissions for a data packet don't need to be explicitly scheduled.

The granted maximum data rate or maximum power ratio for the first transmission may also be used for the retransmissions. Hence, in conventional E-DCH operation in UMTS, the Node B will provide HARQ feedback in form of a NACK and the scheduling related control signaling will provide a rate keep command to the UE in case a data packet is not successfully decoded.

One possibility to indicate to the UE that the first transmission was missed or heavily corrupted, thereby requesting the transmission of a self-decodable version of the data packet again, may be the transmission of a NACK and in addition some scheduling related control information not commonly transmitted in combination with a NACK, e.g. a rate down command or rate up command. This "unusual" combination of HARQ feedback signaling and scheduling related control signaling allows the introduction of the additional HARQ feedback level "MISSED" suggested above without introducing a new HARQ feedback level and hence requiring an additional increase in the transmission power for HARQ feedback signaling.

According to this embodiment of the invention, the UE may monitor the control channel transmitting the relative grants (rate up/down/keep) and the control channel transmitting the HARQ feedback (ACK/NACK).

Further, in another embodiment of the invention it may be considered to use the same channelization code for the HARQ feedback signaling and scheduling related feedback signaling. A relative grant and the HARQ feedback may for example be IQ multiplexed. For example, if the UE detects a NACK and rate down command, it may transmit a self-decodable version of the data packet again. Otherwise, a non-self-decodable version of the data packet is transmitted to the Node B. Obviously, in case the UE receives an ACK for a data packet from the Node B, the next data packet (first transmission thereof) is transmitted to the Node B.

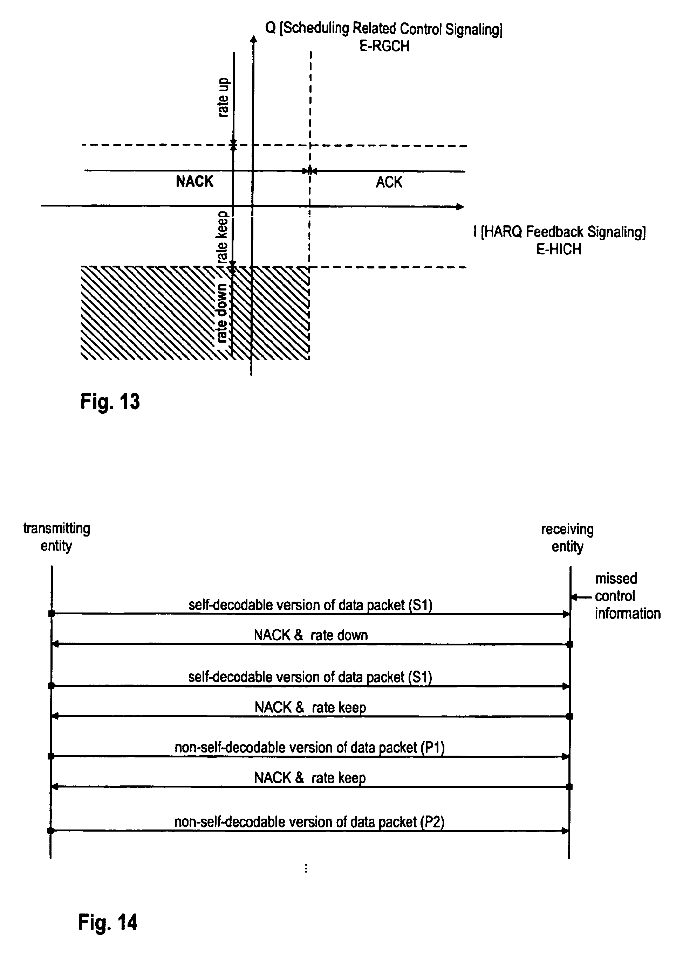

A request for the transmission of a self-decodable version of the data packet using IQ multiplexing of relative grants and HARQ feedback according to one embodiment of the invention is shown in Fig. 13. The figure shows the decision areas in the IQ plane. On the l-branch the HARQ feedback information is transmitted. The control channel is referred to as E-HICH. The relative grants are transmitted on the Q-branch. The scheduling related control channel is referred to as E-RGCH. The marked area denotes the region where received signal points will be interpreted as NACK in combination with a "RATE DOWN" command.

Fig. 14 shows an exemplary HARQ IR scheme according to one embodiment of the invention. In Fig. 14 it has been assumed that the first transmission of the data packet has not been detected by the Node B or has been heavily corrupted. The Node B determines that the control information related to the first transmission, i.e. the self-decodable version S1 of the data packet, has not been decoded successfully, and therefore the Node B may not detect the latter. In the example, the Node B therefore sends a NACK as well as a rate down command to the UE. This combination of HARQ feedback signaling and scheduling related control signaling indicates to the UE to transmit a further self-decodable version of the data packet, instead of a non-self-decodable version thereof as in conventional systems (see Fig. 11).

The UE therefore transmits a further self-decodable version of the data packet which may be or which may not be identical to the self-decodable version S1 the data packet.

Upon reception of the self-decodable version of the data packet, which is S1 in the example shown in Figure 14, the Node B may have missed the control information for the self-decodable version of the data packet or the self-decodable version of the data packet is heavily corrupted. In this case the Node B may again request a self-decodable version of the data packet.

Assuming that the self-decodable version of the data packet has been detected successfully, but its decoding has not been successful, the Node B may provide a NACK together with a rate keep command to the UE. The UE will interpret this type of feedback as an instruction to transmit incremental redundancy information, e.g. the non-self-decodable version of the data packet with the first set parity bits (P1).

Upon receiving the non-self-decodable version of the data packet the Node B will soft combine the data of non-self-decodable version (parity bits) of the data packet with the data of self-decodable version of the data packet and will try to decode the combined data.

In case the data packet is decoded successfully, the Node B may signal an ACK to the UE. If decoding is not successful, the Node B may request the transmission of a further non-self-decodable version (P2) of the data packet.

Upon receiving the non-self-decodable version of the data packet with the second set of parity bits P2 (and possibly further non-self-decodable versions of the data packet), the Node B may soft combine the received version of the data packet and versions thereof received previously and may try to decode the soft combined data.

In the latter exemplary embodiment shown in Fig. 14, a situation may occur where the soft buffer in the HARQ Retransmission entity of the MAC-e entity of the Node B may no longer store the different versions of the data packet transmitted within the HARQ retransmission process.

The soft buffer for the HARQ protocol between UE and Node B may be located in the Node B's physical layer. Since the Node B manages the soft buffer of all UE under its control, buffer sharing may be useful. As already mentioned An HARQ IR scheme may provide higher gains compared to HARQ CC schemes but at the cost of requiring more soft buffer at the receiving entity.

In case the HARQ receiving entity (Node B) has no more soft buffer left for additional redundancy, it would be a waste of radio resources to transmit any further parity bits from transmitter side. In that case the Node B requests the transmission of a self-decodable Redundancy version or the initial transmission, e.g. by signaling "NACK" and "Down", instead of further parity bits (NACK). This allows for the exploiting of the soft combining gain.

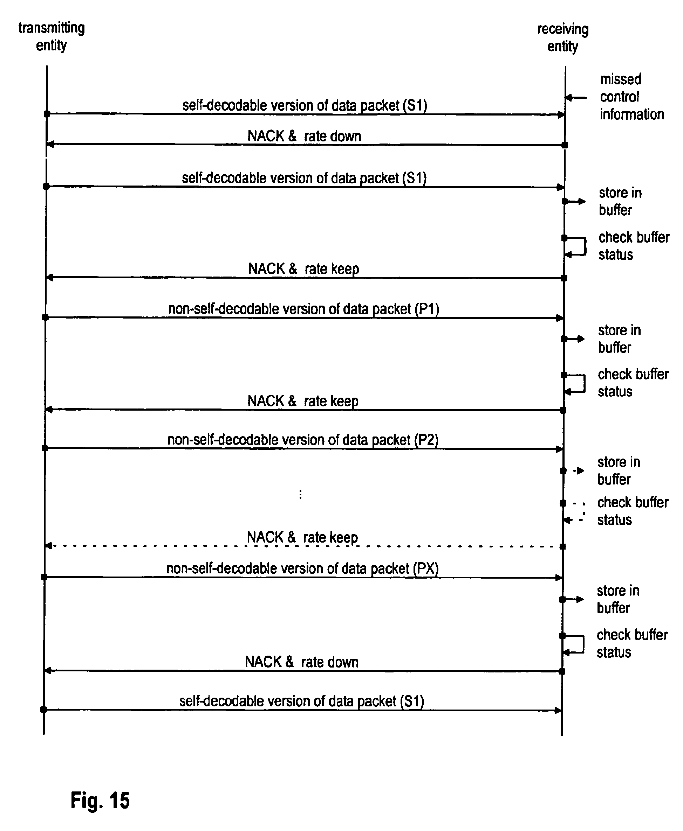

Fig. 15 shows a modification of the embodiment according to Fig. 14, wherein the Node B may determine if there is sufficient soft buffer space remaining for an additional non-self-decodable version of the data packet. If the soft buffer fill status exceeds a predetermined threshold may request the transmission of a self-decodable version of the data packet.

In a further embodiment of the invention, the transmission power for retransmissions may be reduced. In the example below the transmission power of the non-self decodable data versions of the data packet is reduced by a predefined offset. This power offset may for example be configured by the network. One exemplary configuration could look like:

| **First transmission** | **1^{st} retransmission** | **2^{nd} retransmission** | **3^{th} retransmission** |
|---|---|---|---|
| self-decodable | non-self-decodable | non- self-decodable | self-decodable |
| 0 dB | -8 dB | -8 dB | 0 dB |

It should be noted that the power reduction is relative to the power ratio between E-DPDCH/DPCCH (β_{EUL}). In case the Node B requests for example the UE to (re)transmit a self-decodable version of the data packet, this transmission should be transmitted with the same power as the first transmission (0dB), rather than with reduced power:

| **First transmission** | **1^{st} retransmission** | **2^{nd} retransmission** | **3^{th} retransmission** |
|---|---|---|---|
| self-decodable | self-decodable | non-self-decodable | non-self-decodable |
| 0 dB | 0dB | -8 dB | -8 dB |

Another possible solution may be that scheduling related information and HARQ feedback is jointly encoded. Assuming that for example 3 bits are used for the coding of scheduling and HARQ control information, the signaling may look like the following example:

| **Bit A** | **Bit B** | **Bit C** | **Description** |
|---|---|---|---|
| 0 | 0 | 0 | ACK, Rate Up |
| 0 | 0 | 1 | NACK, Rate Up |
| 0 | 1 | 0 | ACK, Rate Down |
| 0 | 1 | 1 | NACK, Rate Down |
| 1 | 0 | 0 | ACK, Rate Keep |
| 1 | 0 | 1 | NACK, Rate Keep |
| 1 | 1 | 0 | Request for self-decodable RV |
| 1 | 1 | 1 | Request for self-decodable RV |

This latter implementation may for example be especially useful when using a HARQ IR scheme with asynchronous retransmissions. In this case also the retransmissions may be scheduled such that a special combination of HARQ feedback and scheduling related control commands can not be interpreted different from their usual meaning. Hence, all possible combinations of HARQ feedback and scheduling commands are represented by a predetermined bit combination, as illustrated for exemplary purposes in the table above.

Another embodiment of the invention relates to the implementation of the above described various embodiments using hardware and software. It is recognized that the various above mentioned methods as well as the various logical blocks, modules, circuits described above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A HARQ method using incremental redundancy and providing synchronous retransmissions, the method comprising the steps of:
receiving at a receiving entity HARQ related control information for a data packet from a transmitting entity,
receiving a self-decodable version of the data packet at the receiving entity using the HARQ related control information,
transmitting from the receiving entity to the transmitting entity feedback, wherein the feedback instructs the transmitting entity
a) to transmit a self-decodable version of the data packet, if the receiving entity has unsuccessfully decoded the HARQ related control information,
b) to transmit a non-self-decodable version of the data packet providing incremental redundancy information for the self-decodable version of the data packet, if the self-decodable version of the data packet has not been decoded successfully by the receiving entity, or
c) to transmit a self-decodable version of another data packet, if the self-decodable version of the data packet has been decoded successfully by the receiving entity, and
wherein the feedback is communicated to the transmitting entity by using a combination of a scheduling grant and HARQ feedback signaling.

2. The method according to claim 1, wherein the instructions a), b) and c) are communicated to the transmitting entity by a combination of rate up, rate keep and rate down commands of scheduling related control signaling and acknowledgements and negative acknowledgements of the HARQ feedback signaling.

3. The method according to claim 2, wherein the instruction a) to transmit a self-decodable version of the data packet is communicated by a combination of a negative acknowledgment and a rate up or rate down command,
the instruction b) to transmit a non-self-decodable version of the data packet providing incremental redundancy information for the self-decodable version of the data packet is indicated by a combination of a negative acknowledgement and a rate keep command, and
the instruction c) to transmit a self-decodable version of another data packet is indicated by a combination of a acknowledgement and an arbitrary command of the scheduling related control signaling.

4. The method according to one of claims 1 to 3, further comprising the step of receiving at the receiving entity another HARQ related control information enabling the receiving entity to receive a self-decodable version of the data packet, a non-self-decodable version of the data packet or a self-decodable version of another data packet from the transmitting entity in response to the feedback and
receiving a self-decodable version of the data packet, a non-self-decodable version of the data packet or a self-decodable version of another data packet from the transmitting entity in response to the feedback.

5. The method according to one of claims 1 to 4, wherein the scheduling related control signaling and the HARQ feedback signaling are received via separate control channels.

6. The method according to one of claims 1 to 5, wherein HARQ related control information for a data packet enabling the reception of an arbitrary version of the data packet is transmitted via a control channel and the different versions of a data packet are transmitted via a data channel.

7. The method according to one of claims 1 to 6, further comprising the steps of:
receiving at the receiving entity a non-self-decodable version of the data packet,
storing and soft combining the received non-self-decodable version of the data packet and previously received versions of the data packet in a soft buffer at the receiving entity to form a combined data packet,
decoding the combined data packet at the receiving entity,
wherein the feedback transmitted by the receiving entity to the transmitting entity instructs the transmitting entity to transmit a self-decodable version of the data packet, if the receiving entity has not successfully decoded the combined data packet and if the fill status of the soft buffer is above a predetermined threshold.

8. The method according to one of claims 1 to 7, further comprising the step of:
decoding the self-decodable version of the data packet received from the transmitting entity in a soft decoder, wherein a probability metric is generated during the decoding process, and
in case the data packet received from the transmitting entity has not been decoded correctly, the feedback transmitted by the receiving entity instructs the transmitting entity to transmit a self-decodable version of the data packet, if the probability metric is below a predetermined threshold, or the feedback transmitted by the receiving entity instructs the transmitting entity to transmit a non-self-decodable version of the data packet, if the probability metric is higher than or equal to the predetermined threshold.

9. The method according to claim 8, wherein the probability metric is a function of the log likelihood ratios of the soft decoder output after decoding a combined data packet.

10. The method according to one of claims 1 to 9, wherein the self-decodable version of the data packet comprises the systematic bits and is transmitted via a communication channel,
wherein the method further comprises the step of measuring at the receiving entity the channel quality when receiving the self-decodable version of the data packet and
wherein the feedback transmitted by the receiving entity instructs the transmitting entity to transmit a self-decodable version of the data packet, if the channel quality is below a predetermined threshold value.

11. The method according to one of claims 1 to 4, further comprising the step of determining that the control information has been correctly decoded by the receiving entity based on a CRC check, based on the received SIR of the control channel or by the use of an energy metric.

12. The method according to one of claims 1 to 11, wherein a retransmission of a self-decodable version of the data packet is transmitted at the same power level as the initial transmission of the self-decodable version of the data packet.

13. The method according to one of claims 1 to 12, wherein a non-self-decodable version of the data packet is transmitted at a lower power level than a self-decodable data packet.

14. The method according to one of claims 1 to 13, wherein the receiving entity is a base station and the transmitting entity is a mobile terminal in a mobile communication system.

15. A receiving entity in a mobile communication system providing an HARQ retransmission protocol using incremental redundancy, the receiving entity comprising:
a receiver for receiving HARQ related control information for a data packet from a transmitting entity, and for receiving the self-decodable version of the data packet at the receiving entity using the HARQ related control information, and
a transmitter for transmitting feedback to the transmitting entity, wherein the feedback instructs the transmitting entity
a) to transmit a self-decodable version of the data packet, if the receiving entity has unsuccessfully decoded the HARQ related control information,
b) to transmit a non-self-decodable version of the data packet providing incremental redundancy information for the self-decodable version of the data packet, if the self-decodable version of the data packet has not been decoded successfully by the receiving entity, or
c) to transmit a self-decodable version of another data packet, if the self-decodable version of the data packet has been decoded successfully by the receiving entity,
wherein the receiving entity is adapted to communicate the feedback to the transmitting entity by using a combination of a scheduling grant and HARQ feedback signaling.

16. A transmitting entity in a mobile communication system providing an HARQ retransmission protocol using incremental redundancy, the transmitting entity comprising:
a transmitter for transmitting HARQ related control information for a data packet to a receiving entity, wherein the HARQ related control information enables the receiving entity to receive a the data packet, and for transmitting a self-decodable data packet to the receiving entity, and
a receiver for receiving feedback from the receiving entity, wherein the feedback instructs the transmitting entity
a) to transmit a self-decodable version of the data packet, if the receiving entity has unsuccessfully decoded the HARQ related control information,
b) to transmit a non-self-decodable version of the data packet providing incremental redundancy information for the self-decodable version of the data packet, if the self-decodable version of the data packet has not been decoded successfully by the receiving entity, or
c) to transmit a self-decodable version of another data packet, if the self-decodable version of the data packet has been decoded successfully by the receiving entity,
wherein the transmitting entity is adapted to receive the feedback by using a combination of a scheduling grant and HARQ feedback signaling.

17. A mobile communication system comprising a receiving entity according to claim 15 and a transmitting entity according to claim 16.

18. A computer-readable storage medium for storing instructions that, when executed by a processor of a receiving entity, cause the receiving entity to provide an HARQ retransmission protocol using incremental redundancy, by:
receiving HARQ related control information for a data packet from a transmitting entity,
receiving a self-decodable version of the data packet at the receiving entity using the HARQ related control signaling, and
transmitting feedback to the transmitting entity, wherein the feedback instructs the transmitting entity
a) to transmit a self-decodable version of the data packet, if the receiving entity has unsuccessfully decoded the HARQ related control information,
b) to transmit a non-self-decodable version of the data packet providing incremental redundancy information for the self-decodable data packet, if the self-decodable version of the data packet has not been decoded successfully by the receiving entity, or
c) to transmit a self-decodable version of another data packet, if the self-decodable version of the data packet has been decoded successfully by the receiving entity, and
wherein the feedback is communicated to the transmitting entity by using a combination of a scheduling grant and HARQ feedback signaling.

19. A computer-readable storage medium for storing instructions that, when executed by a processor of a transmitting entity, cause the transmitting entity to provide an HARQ retransmission protocol using incremental redundancy, by:
transmitting HARQ related control information for a data packet to a receiving entity, wherein the control information enables the receiving entity to receive the data packet,
transmitting a self-decodable version of the data packet to the receiving entity, and
receiving feedback from the receiving entity, wherein the feedback instructs the transmitting entity
a) to transmit a self-decodable version of the data packet, if the receiving entity has unsuccessfully decoded the HARQ related control information,
b) to transmit a non-self-decodable version of the data packet providing incremental redundancy information for the self-decodable version of the data packet, if the self-decodable version of the data packet has not been decoded successfully by the receiving entity, or
c) to transmit a self-decodable version of another data packet, if the self-decodable version of the data packet has been decoded successfully by the receiving entity, and
wherein the feedback is received by using a combination of a scheduling grant and HARQ feedback signaling.

## Patentansprüche

1. HARQ-Verfahren, das inkrementale Redundanz verwendet und synchrone Sendewiederholungen bereitstellt, wobei das Verfahren die folgenden Schritte umfasst:
Empfangen auf HARQ bezogener Steuerinformationen für ein Datenpaket von einer sendenden Einheit an einer empfangenden Einheit,
Empfangen einer selbst-dekodierbaren Version des Datenpaketes an der empfangenden Einheit unter Verwendung der auf HARQ bezogenen Steuerinformationen,
Senden von Feedback von der empfangenden Einheit zu der sendenden Einheit, wobei das Feedback die sendende Einheit anweist
a) eine selbst-dekodierbare Version des Datenpaketes zu senden, wenn die empfangende Einheit die auf HARQ bezogenen Steuerinformationen nicht erfolgreich dekodiert hat,
b) eine nicht selbst-dekodierbare Version des Datenpaketes zu senden, die inkrementale Redundanzinformationen für die selbst-dekodierbare Version des Datenpaketes bereitstellt, wenn die selbst-dekodierbare Version des Datenpaketes durch die empfangende Einheit nicht erfolgreich dekodiert worden ist, oder
c) eine selbst-dekodierbare Version eines anderen Datenpaketes zu senden, wenn die selbst-dekodierbare Version des Datenpaketes durch die empfangende Einheit erfolgreich dekodiert worden ist, und
wobei das Feedback unter Verwendung einer Kombination aus einem Scheduling Grant und HARQ-Feedback-Signalisierung zu der sendenden Einheit übertragen wird.

2. Verfahren nach Anspruch 1, wobei die Anweisungen a), b) und c) mittels einer Kombination aus Befehlen von auf Scheduling bezogener Steuersignalisierung zum Erhöhen der Rate (rate up), Beibehalten der Rate (keep) und Verringern der Rate (rate down) sowie Bestätigungen (acknowledgments) und negativen Bestätigungen (negative acknowledgments) der HARQ-Feedback-Signalisierung zu der sendenden Einheit übertragen werden.

3. Verfahren nach Anspruch 2, wobei die Anweisung a) zum Senden einer selbst-dekodierbaren Version des Datenpaketes durch eine Kombination einer negativen Bestätigung und eines Befehls zum Erhöhen der Rate oder Verringern der Rate übertragen wird,
die Anweisung b) zum Senden einer nicht selbst-dekodierbaren Version des Datenpaketes, die inkrementale Redundanzinformationen für die selbst-dekodierbare Version des Datenpaketes bereitstellt, durch eine Kombination aus einer negativen Bestätigung und einem Befehl zum Beibehalten der Rate angezeigt wird, und
die Anweisung c) zum Senden einer selbst-dekodierbaren Version eines anderen Datenpaketes durch eine Kombination aus einer Bestätigung und einem beliebigen Befehl der auf Scheduling bezogenen Steuersignalisierung angezeigt wird.

4. Verfahren nach einem der Ansprüche1 bis 3, das des Weiteren den Schritt des Empfangens weiterer auf HARQ bezogener Steuerinformationen an der empfangenden Einheit umfasst, die die empfangende Einheit befähigen, in Reaktion auf das Feedback eine selbst-dekodierbare Version des Datenpaketes, eine nicht selbst-dekodierbare Version des Datenpaketes oder eine selbst-dekodierbare Version eines anderen Datenpaketes von der sendenden Einheit zu empfangen, und
Empfangen einer selbst-dekodierbaren Version des Datenpaketes, einer nicht selbst-dekodierbaren Version des Datenpaketes oder einer selbst-dekodierbaren Version eines anderen Datenpaketes von der sendenden Einheit in Reaktion auf das Feedback.

5. Verfahren nach einem der Ansprüche 1 bis 4, wobei die auf Scheduling bezogene Steuersignalisierung und die HARQ-Feedback-Signalisierung über separate Steuerkanäle empfangen werden.

6. Verfahren nach einem der Ansprüche 1 bis 5, wobei auf HARQ bezogenen Steuerinformationen für ein Datenpaket, die den Empfang einer beliebigen Version des Datenpaketes ermöglichen, über einen Steuerkanal gesendet werden und die anderen Versionen eines Datenpaketes über einen Datenkanal gesendet werden.

7. Verfahren nach einem der Ansprüche 1 bis 6, das des Weiteren die folgenden Schritte umfasst:
Empfangen einer nicht selbst-dekodierbaren Version des Datenpaketes an der empfangenden Einheit,
Speichern und Durchführen von Soft Combining der empfangenen nicht selbst-dekodierbaren Version des Datenpaketes und zuvor empfangener Versionen des Datenpaketes in einem Soft-Buffer an der empfangenden Einheit, um ein kombiniertes Datenpaket zu erzeugen,
Dekodieren des kombinierten Datenpaketes an der empfangenden Einheit,
wobei die durch die empfangende Einheit zu der sendenden Einheit gesendete Feedback die sendende Einheit anweist, eine selbst-dekodierbare Version des Datenpaketes zu senden, wenn die empfangende Einheit das kombinierte Datenpaket nicht erfolgreich dekodiert hat und wenn der Füllstatus des Soft-Buffers über einer vorgegebenen Schwelle liegt.

8. Verfahren nach einem der Ansprüche 1 bis 7, das des Weiteren die folgenden Schritte umfasst:
Dekodieren der selbst-dekodierbaren Version des von der sendenden Einheit empfangenen Datenpaketes in einer Soft-Dekodiereinrichtung, wobei während des Dekodierprozesses eine Wahrscheinlichkeits-Metrik erzeugt wird, und
wenn das von der sendenden Einheit empfangende Datenpaket nicht korrekt dekodiert worden ist, das durch die empfangende Einheit gesendete Feedback die sendende Einheit anweist, eine selbst-dekodierbare Version des Datenpaketes zu senden, wenn die Wahrscheinlichkeits-Metrik unter einer vorgegebenen Schwelle liegt, oder das durch die empfangende Einheit gesendete Feedback die sendende Einheit anweist, eine nicht selbst-dekodierbare Version des Datenpaketes zu senden, wenn die Wahrscheinlichkeits-Metrik auf oder über der vorgegebenen Schwelle liegt.

9. Verfahren nach Anspruch 8, wobei die Wahrscheinlichkeits-Metrik eine Funktion der Log-Likelihood-Verhältnisse des Ausgangs der Soft-Dekodiereinrichtung nach Dekodieren eines kombinierten Datenpaketes ist.

10. Verfahren nach einem der Ansprüche 1 bis 9, wobei die selbst-dekodierbare Version des Datenpaketes die systematischen Bits umfasst und über einen Kommunikationskanal gesendet wird,
wobei das Verfahren des Weiteren den Schritt des Messens der Kanalqualität an der empfangenden Einheit beim Empfangen der selbst-dekodierbaren Version des Datenpaketes umfasst, und
wobei das durch die empfangende Einheit gesendete Feedback die sendende Einheit anweist, eine selbst-dekodierbare Version des Datenpaketes zu senden, wenn die Kanalqualität unter einem vorgegebenen Schwellenwert liegt.

11. Verfahren nach einem der Ansprüche 1 bis 4, das des Weiteren den Schritt umfasst, in dem durch die empfangende Einheit auf Basis einer CRC-Prüfung, auf Basis des empfangenen SIR des Steuerkanals oder unter Verwendung einer Energie-Metrik festgestellt wird, dass die Steuerinformationen durch die empfangende Einheit korrekt dekodiert worden sind.

12. Verfahren nach einem der Ansprüche 1 bis11, wobei eine Sendewiederholung einer selbst-dekodierbaren Version des Datenpaketes auf dem gleichen Leistungspegel gesendet wird wie die erste Übertragung der selbst-dekodierbaren Version des Datenpaketes.

13. Verfahren nach einem der Ansprüche 1 bis 12, wobei eine nicht selbst-dekodierbare Version des Datenpaketes auf einem niedrigeren Leistungspegel gesendet wird als ein selbst-dekodierbares Datenpaket.

14. Verfahren nach einem der Ansprüche 1 bis 13, wobei die empfangende Einheit eine Basisstation ist und die sendende Einheit ein Mobil-Endgerät in einem Mobilkommunikationssystem ist.

15. Empfangseinheit in einem Mobilkommunikationssystem, das ein HARQ-Sendewiederholungs-Protokoll unter Verwendung inkrementaler Redundanz bereitstellt, wobei die empfangende Einheit umfasst:
einen Empfänger zum Empfangen auf HARQ bezogener Steuerinformationen für ein Datenpaket von einer Sendeeinheit und zum Empfangen der selbst-dekodierbaren Version des Datenpaketes an der Empfangseinheit unter Verwendung der auf HARQ bezogenen Steuerinformationen, und
einer Sender zum Senden von Feedback zu der Sendeeinheit, wobei das Feedback die Sendeeinheit anweist
a) eine selbst-dekodierbare Version des Datenpaketes zu senden, wenn die Empfangseinheit die auf HARQ bezogenen Steuerinformationen nicht erfolgreich dekodiert hat,
b) eine nicht selbst-dekodierbare Version des Datenpaketes zu senden, die inkrementale Redundanzinformationen für die selbst-dekodierbare Version des Datenpaktes bereitstellt, wenn die selbst-dekodierbare Version des Datenpaketes durch die Empfangseinheit nicht erfolgreich dekodiert worden ist, oder
c) eine selbst-dekodierbare Version eines anderen Datenpaketes zu senden, wenn die selbst-dekodierbare Version des Datenpaketes durch die Empfangseinheit erfolgreich dekodiert worden ist,
wobei die Empfangseinheit so eingerichtet ist, dass sie das Feedback unter Verwendung einer Kombination aus einem Scheduling Grant und HARQ-Feedback-Signalisierung zu der Sendeeinheit überträgt.

16. Sendeeinheit in einem Mobilkommunikationssystem, das ein HARQ-Sendewiederholungsprotokoll unter Verwendung inkrementaler Redundanz bereitstellt, wobei die Sendeeinheit umfasst:
einen Sender zum Senden auf HARQ bezogener Steuerinformationen für ein Datenpaket zu einer Empfangseinheit, wobei die auf HARQ bezogenen Steuerinformationen die Empfangseinheit befähigen, das Datenpaket zu empfangen, und zum Senden eines selbst-dekodierbaren Datenpaketes zu der Empfangseinheit, und
einen Empfänger zum Empfangen von Feedback von der Empfangseinheit, wobei das Feedback die Sendeeinheit anweist
a) eine selbst-dekodierbare Version des Datenpaketes zu senden, wenn die Empfangseinheit die auf HARQ bezogenen Steuerinformationen nicht erfolgreich dekodiert hat,
b) eine nicht selbst-dekodierbare Version des Datenpaketes zu senden, die inkrementale Redundanzinformationen für die selbst-dekodierbare Version des Datenpaketes bereitstellt, wenn die selbst-dekodierbare Version des Datenpaketes durch die Empfangseinheit nicht erfolgreich dekodiert worden ist, oder
c) eine selbst-dekodierbare Version eines anderen Datenpaketes zu senden, wenn die selbst-dekodierbare Version des Datenpaketes durch die Empfangseinheit erfolgreich dekodiert worden ist,
wobei die Sendeeinheit so eingerichtet ist, dass sie das Feedback unter Verwendung einer Kombination aus einem Scheduling Grant und HARQ-Feedback-Signalisierung empfängt.

17. Mobilkommunikationssystem, das eine Empfangseinheit nach Anspruch 15 und eine Sendeeinheit nach Anspruch 16 umfasst.

18. Computerlesbares Speichermedium zum Speichern von Befehlen, die, wenn sie durch eine Verarbeitungseinrichtung einer empfangenden Einheit ausgeführt werden, die empfangende Einheit veranlassen, ein HARQ-Sendewiederholungsprotokoll unter Verwendung inkrementaler Redundanz bereitzustellen, indem sie
auf HARQ bezogene Steuerinformationen für ein Datenpaket von einer sendenden Einheit empfängt,
eine selbst-dekodierbare Version des Datenpaketes an der empfangenden Einheit unter Verwendung der auf HARQ bezogenen Steuersignalisierung empfängt, und
Feedback zu der sendenden Einheit sendet, wobei das Feedback die sendende Einheit anweist
a) eine selbst-dekodierbare Version des Datenpaketes zu senden, wenn die empfangende Einheit die auf HARQ bezogenen Steuerinformationen nicht erfolgreich dekodiert hat,
b) eine nicht selbst-dekodierbare Version des Datenpaketes zu senden, die inkrementale Redundanzinformationen für das selbst-dekodierbare Datenpaket bereitstellt, wenn die selbst-dekodierbare Version des Datenpaketes durch die empfangende Einheit nicht erfolgreich dekodiert worden ist, oder
c) eine selbst-dekodierbare Version eines anderen Datenpaketes zu senden, wenn die selbst-dekodierbare Version des Datenpaketes durch die empfangende Einheit erfolgreich dekodiert worden ist, und
wobei das Feedback unter Verwendung einer Kombination aus einem Scheduling Grant und HARQ-Feedback-Signalisierung zu der sendenden Einheit übertragen wird.

19. Computerlesbares Speichermedium zum Speichern von Befehlen, die, wenn sie durch eine Verarbeitungseinrichtung einer sendenden Einheit ausgeführt werden, die sendende Einheit veranlassen, ein HARQ-Sendewiederholungsprotokoll unter Verwendung inkrementaler Redundanz bereitzustellen, indem sie
auf HARQ bezogene Steuerinformationen für ein Datenpaket zu einer empfangenden Einheit sendet, wobei die Steuerinformationen die empfangende Einheit befähigen, das Datenpaket zu empfangen,
die selbst-dekodierbare Version des Datenpaketes zu der empfangenden Einheit sendet, und
Feedback von der empfangenden Einheit empfängt, wobei das Feedback die sendende Einheit anweist
a) eine selbst-dekodierbare Version des Datenpaketes zu senden, wenn die empfangende Einheit die auf HARQ bezogenen Steuerinformationen nicht erfolgreich dekodiert hat,
b) eine nicht selbst-dekodierbare Version des Datenpaketes zu senden, die inkrementale Redundanzinformationen für die selbst-dekodierbare Version des Datenpaketes bereitstellt, wenn die selbst-dekodierbare Version des Datenpaketes durch die empfangende Einheit nicht erfolgreich dekodiert worden ist, oder
c) eine selbst-dekodierbare Version eines anderen Datenpaketes zu senden, wenn die selbst-dekodierbare Version des Datenpaketes durch die empfangende Einheit erfolgreich dekodiert worden ist, und
wobei das Feedback unter Verwendung einer Kombination aus einem Scheduling Grant und HARQ-Feedback-Signalisierung empfangen wird.

## Revendications

1. Procédé HARQ utilisant une redondance incrémentale et fournissant des retransmissions synchrones, le procédé comprenant les étapes consistant à:
recevoir au niveau d'une entité de réception, depuis une entité de transmission, des informations de commande relatives à l'HARQ pour un paquet de données,
recevoir une version auto-décodable du paquet de données à l'entité de réception en utilisant les informations de commande relatives à l'HARQ,
transmettre, de l'entité de réception à l'entité de transmission, un retour où le retour ordonne à l'entité de transmission
a) de transmettre une version auto-décodable du paquet de données, si l'entité de réception n'a pas réussi à décoder les informations de commande relatives à l'HARQ,
b) de transmettre une version qui n'est pas auto-décodable du paquet de données fournissant des informations de redondance incrémentale pour la version auto-décodable du paquet de données, si l'entité de réception n'a pas réussi à décoder la version auto-décodable du paquet de données, ou
c) de transmettre une version auto-décodable d'un autre paquet de données, si l'entité de réception est arrivée à décoder la version auto-décodable du paquet de données, et
où le retour est communiqué à l'entité de transmission en utilisant une combinaison d'un octroi de planification et d'une signalisation de retour HARQ.

2. Procédé selon la revendication 1, dans lequel les instructions a), b) et c) sont communiquées à l'entité de transmission par une combinaison d'instructions d'élévation de débit, de maintien de débit, et d'abaissement de débit de signalisation de commande relative à la planification et d'accusés de réception et d'accusés de réception négatifs de la signalisation de retour HARQ.

3. Procédé selon la revendication 2, dans lequel l'instruction a) de transmettre une version auto-décodable du paquet de données est communiquée par une combinaison d'un accusé de réception négatif et d'une instruction d'élévation de débit on d'abaissement de débit,
l'instruction b) de transmettre une version qui n'est pas auto-décodable du paquet de données fournissant des informations de redondance incrémentale pour la version auto-décodable du paquet de données est indiquée par une combinaison d'un accusé de réception négatif et d'une instruction de maintien de débit, et
l'instruction c) de transmettre une version auto-décodable d'un autre paquet de données est indiquée par une combinaison d'un accusé de réception et d'une instruction arbitraire de la signalisation de commande relative à la planification.

4. Procédé selon l'une des revendications 1 à 3, comprenant en plus l'étape consistant à recevoir à l'entité de réception d'autres informations de commande relatives à l'HARQ permettant à l'entité de réception de recevoir une version auto-décodable du paquet de données, une version qui n'est pas auto-décodable du paquet de données ou une version auto-décodable d'un autre paquet de données depuis l'entité de transmission en réponse au retour et à
recevoir une version auto-décodable du paquet de données, une version qui n'est pas auto-décodable du paquet de données ou une version auto-décodable d'un autre paquet de données depuis l'entité de transmission en réponse au retour.

5. Procédé selon l'une des revendications 1 à 4, dans lequel la signalisation de commande relative à la planification et la signalisation de retour HARQ sont reçues par le biais de canaux de commande séparés.

6. Procédé selon l'une des revendications 1 à 5, dans lequel les informations de commande relatives à l'HARQ pour un paquet de données permettant la réception d'une version arbitraire du paquet de données sont transmises par le biais d'un canal de commande et les différentes versions d'un paquet de données sont transmises par le biais d'un canal de données.

7. Procédé selon l'une des revendications 1 à 6, comprenant en plus les étapes de:
réception au niveau de l'entité de réception d'une version qui n'est pas auto-décodable du paquet de données,
stockage et combinaison souple de la version qui n'est pas auto-décodable reçue du paquet de données et des versions précédemment reçues du paquet de données dans un tampon souple à l'entité de réception pour former un paquet de données combiné,
décodage, au niveau de l'entité de réception, du paquet de données combiné,
où le retour transmis par l'entité de réception à l'entité de transmission ordonne à l'entité de transmission de transmettre une version auto-décodable du paquet de données, si l'entité de réception n'a pas réussi à décoder le paquet de données combiné et si l'état de remplissage du tampon souple est au-delà d'un seuil prédéterminé.

8. Procédé selon l'une des revendications 1 à 7, comprenant en plus les étapes consistant à:
décoder la version auto-décodable du paquet de données reçu depuis l'entité de transmission dans un décodeur souple, où une mesure de probabilité est générée durant le processus de décodage, et
dans le cas où le paquet de données reçu depuis l'entité de transmission n'a pas été décodé correctement, le retour transmis par l'entité de réception ordonne à l'entité de transmission de transmettre une version auto-décodable du paquet de données, si la mesure de probabilité est en dessous d'un seuil prédéterminé, ou le retour transmis par l'entité de réception ordonne à l'entité de transmission de transmettre une version qui n'est pas auto-décodable du paquet de données, si la mesure de probabilité est supérieure ou égale au seuil prédéterminé.

9. Procédé selon la revendication 8, dans lequel la mesure de probabilité est une fonction du logarithme des rapports de vraisemblance du décodeur souple sortis après avoir décodé un paquet de données combiné.

10. Procédé selon l'une des revendications 1 à 9, dans lequel la version auto-décodable du paquet de données comprend les bits systématiques et est transmise par le biais d'un canal de communication,
où le procédé comprend en plus l'étape de mesure à l'entité de réception de la qualité du canal lors de la réception de la version auto-décodable du paquet de données et
où le retour transmis par l'entité de réception ordonne à l'entité de transmission de transmettre une version auto-décodable du paquet de données, si la qualité du canal se trouve en dessous d'une valeur seuil prédéterminée.

11. Procédé selon l'une des revendications 1 à 4, comprenant en plus l'étape consistant à déterminer que les informations de commande ont été correctement décodées par l'entité de réception sur la base d'une vérification CRC, selon le SIR reçu du canal de commande ou par l'utilisation d'une mesure énergétique.

12. Procédé selon l'une des revendications 1 à 11, dans lequel une retransmission d'une version auto-décodable du paquet de données est transmise au même niveau de puissance que la transmission initiale de la version auto-décodable du paquet de données.

13. Procédé selon l'une des revendications 1 à 12, dans lequel une version qui n'est pas auto-décodable du paquet de données est transmise à un niveau de puissance inférieur qu'un paquet de données auto-décodable.

14. Procédé selon l'une des revendications 1 à 13, dans lequel l'entité de réception est une station de base et l'entité de transmission est un terminal mobile dans un système de communication mobile.

15. Entité de réception dans un système de communication mobile fournissant un protocole de retransmission HARQ utilisant une redondance incrémentale, l'entité de réception comprenant:
un récepteur pour recevoir, d'une entité de transmission, des informations de commande relatives à l'HARQ pour un paquet de données, et pour recevoir la version auto-décodable du paquet de données à l'entité de réception en utilisant les informations de commande relatives à l'HARQ, et
un émetteur pour transmettre un retour à l'entité de transmission, dans lequel le retour ordonne à l'entité de transmission
a) de transmettre une version auto-décodable du paquet de données, si l'entité de réception n'a pas réussi à décoder les informations de commande relatives à l'HARQ,
b) de transmettre une version qui n'est pas auto-décodable du paquet de données fournissant des informations de redondance incrémentale pour la version auto-décodable du paquet de données, si l'entité de réception n'a pas réussi à décoder la version auto-décodable du paquet de données, ou
c) de transmettre une version auto-décodable d'un autre paquet de données, si l'entité de réception a réussi à décoder la version auto-décodable du paquet de données,
où l'entité de réception est adaptée pour communiquer le retour à l'entité de transmission en utilisant une combinaison d'un octroi de planification et d'une signalisation de retour HARQ.

16. Entité de transmission dans un système de communication mobile fournissant un protocole de retransmission HARQ utilisant une redondance incrémentale, l'entité de transmission comprenant:
un émetteur pour transmettre à une entité de réception des informations de commande relatives à l'HARQ pour un paquet de données, dans lequel les informations de commande relatives à l'HARQ permettent à l'entité de réception de recevoir le paquet de données, et pour transmettre un paquet de données auto-décodable à l'entité de réception, et
un récepteur pour recevoir un retour depuis l'entité de réception, dans lequel le retour ordonne à l'entité de transmission
a) de transmettre une version auto-décodable du paquet de données, si l'entité de réception n'a pas réussi à décoder les informations de commande relatives à l'HARQ,
b) de transmettre une version qui n'est pas auto-décodable du paquet de données fournissant des informations de redondance incrémentale pour la version auto-décodable du paquet de données, si l'entité de réception n'a pas réussi à décoder la version auto-décodable du paquet de données, ou
c) de transmettre une version auto-décodable d'un autre paquet de données, si l'entité de réception a réussi à décoder la version auto-décodable du paquet de données,
où l'entité de transmission est adaptée pour recevoir le retour en utilisant une combinaison d'un octroi de planification et d'une signalisation de retour HARQ.

17. Système de communication mobile comprenant une entité de réception selon la revendication 15 et une entité de transmission selon la revendication 16.

18. Support de stockage lisible par ordinateur pour stocker des instructions qui, lorsqu'elles sont exécutées par un processeur d'une entité de réception, amènent l'entité de réception à fournir un protocole de retransmission HARQ utilisant une redondance incrémentale, en:
recevant des informations de commande relatives à l'HARQ pour un paquet de données depuis une entité de transmission,
recevant une version auto-décodable du paquet de données à l'entité de réception en utilisant la signalisation de commande relative à l'HARQ, et
transmettant un retour à l'entité de transmission, où le retour ordonne à l'entité de transmission
a) de transmettre une version auto-décodable du paquet de données, si l'entité de réception n'a pas réussi à décoder les informations de commande relatives à l'HARQ,
b) de transmettre une version qui n'est pas auto-décodable du paquet de données fournissant des informations de redondance incrémentale pour le paquet de données auto-décodable, si l'entité de réception n'a pas réussi à décoder la version auto-décodable du paquet de données, ou
c) de transmettre une version auto-décodable d'un autre paquet de données, si l'entité de réception a réussi à décoder la version auto-décodable du paquet de données, et
où le retour est communiqué à l'entité de transmission en utilisant une combinaison d'un octroi de planification et d'une signalisation de retour HARQ.

19. Support de stockage lisible par ordinateur pour stocker des instructions qui, lorsqu'elles sont exécutées par un processeur d'une entité de transmission, amènent l'entité de transmission à fournir un protocole de retransmission HARQ utilisant une redondance incrémentale, en:
transmettant à une entité de réception des informations de commande relatives à l'HARQ pour un paquet de données, où les informations de commande permettent à l'entité de réception de recevoir le paquet de données,
transmettant à l'entité de réception une version auto-décodable du paquet de données, et
recevant un retour depuis l'entité de réception, où le retour ordonne à l'entité de transmission
a) de transmettre une version auto-décodable du paquet de données, si l'entité de réception n'a pas réussi à décoder les informations de commande relatives à l'HARQ,
b) de transmettre une version qui n'est pas auto-décodable du paquet de données fournissant des informations de redondance incrémentale pour la version auto-décodable du paquet de données, si l'entité de réception n'a pas réussi à décoder la version auto-décodable du paquet de données, ou
c) de transmettre une version auto-décodable d'un autre paquet de données, si l'entité de réception a réussi à décoder la version auto-décodable du paquet de données, et
où le retour est reçu en utilisant une combinaison d'un octroi de planification et d'une signalisation de retour HARQ.
